# EUROPEAN PATENT APPLICATION

(11) **EP 4 060 512 A1**
(43) Date of publication of application: **21.09.2022**
(21) Application number: 22161383.9
(22) Date of filing: 10.03.2022
(51) Int. Cl.: G06F 16/16

(54) **INFORMATION PROCESSING APPARATUS, INFORMATION PROCESSING SYSTEM, INFORMATION PROCESSING METHOD, AND CARRIER MEDIUM**

(30) Priority: 19.03.2021 JP 2021045988
(71) Applicant: Ricoh Company, Ltd., Tokyo 143-8555 (JP)
(72) Inventor: Hori, Yuki, Tokyo, 143-8555 (JP); Yamauchi, Shin, Tokyo, 143-8555 (JP)
(74) Representative: Marks & Clerk LLP

(57) **Abstract**

An information processing apparatus (2) includes an acceptance unit (22), a generation unit (27), and a display control unit (24). The acceptance unit (22) accepts an operation on each of a plurality of setting item input units (2312) for setting a file name. The generation unit (27) generates one file name based on a plurality of pieces of file name constituting information associated with each other in response to the operation on each of the plurality of setting item input units (2312). The display control unit (24) displays the one file name generated by the generation unit (27) on a display (240a).

## Description

### Technical Field

The present disclosure relates to an information processing apparatus, an information processing system, an information processing method, and a carrier medium.

### Related Art

Conventionally, a technology of managing data obtained as a result of scanning as a file, assigning a specific file name to the file, and editing the file name has already been known.

For example, in Japanese Unexamined Patent Application Publication No. -2016-15101, a file name [Aaron Smith Contract 20140303120000] set as a default is deleted by a [clear] key 1403, and thereafter [ChangeOfAddress], [Contract], and [Aaron Smith] are successively pressed from a [file name candidate] area 1404 to set a file name.

However, in the related art, there is a problem of lack of convenience that in a case where it is desired to input a file name or in a case where it is desired to partially reset the input file name, the file name is entirely input or the file name is entirely cleared and input again.

### SUMMARY

In order to solve the above-described problem, according to an embodiment of the present disclosure, an information processing apparatus includes an acceptance unit, a generation unit, and a display control unit. The acceptance unit accepts an operation on each of a plurality of setting item input units for setting a file name. The generation unit generates one file name based on a plurality of pieces of file name constituting information associated with each other in response to the operation on each of the plurality of setting item input units. The display control unit displays the one file name generated by the generation unit on a display.

According to the present disclosure, in a case where it is desired to input the file name or in a case where it is desired to reset a part of the input file name, there is an effect that it is possible to edit only information desired to be input or reset.

### BRIEF DESCRIPTION OF SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating an example of an overall configuration of an information processing system;
FIG. 2 is a diagram illustrating an example of a hardware configuration of an information processing apparatus;
FIG. 3 is a diagram illustrating an example of the hardware configuration of the information management apparatus;
FIG. 4 is a diagram illustrating an example of a functional configuration of the information processing system;
FIG. 5A is a conceptual diagram illustrating an example of a login information management table;
FIG. 5B is a conceptual diagram illustrating an example of an attribute information management table;
FIG. 5C is a conceptual diagram illustrating an example of the login information management table;
FIG. 6 is a sequence diagram illustrating an example of general processing;
FIG. 7A is a flowchart illustrating an example of file name generation processing and scan processing;
FIG. 7B is a flowchart illustrating an example of detailed setting processing in the file name generation;
FIG. 8 is a flowchart illustrating an example of file name resetting processing;
FIG. 9 is a diagram illustrating an example of an application list display screen after a scan application is activated;
FIG. 10A is a diagram illustrating an example of a file name editing screen;
FIG. 10B is a diagram illustrating an example of a key input unit in a case where a file name button is operated;
FIG. 11 is a diagram illustrating an example of a file name display screen after being edited by the key input unit;
FIG. 12A is a diagram illustrating an example of the file name editing screen;
FIG. 12B is a diagram illustrating an example of the file name detailed setting screen in a case where a detailed setting button is operated;
FIG. 13A is a diagram illustrating an example of the file name editing screen;
FIG. 13B is a diagram illustrating an example of the file name detailed setting screen in a case where the detailed setting button is operated;
FIG. 13C is a diagram illustrating an example of the file name detailed setting screen while a first setting item buttons is being operated;
FIG. 14A is a diagram illustrating an example of the file name detailed setting screen after the first setting item button is operated;
FIG. 14B is a diagram illustrating an example of the file name detailed setting screen while a second setting item button is being operated;
FIG. 14C is a diagram illustrating an example of the file name detailed setting screen after the second setting item buttons is operated;
FIG. 15A is a diagram illustrating an example of the file name detailed setting screen after the second setting item button is being operated;
FIG. 15B is a diagram illustrating an example of the file name detailed setting screen while a third setting item button is being operated;
FIG. 15C is a diagram illustrating an example of the file name detailed setting screen after the third setting item buttons is operated;
FIG. 16 is a diagram illustrating an example of a display screen in a state in which the file name is set after the setting item button is operated on the file name detailed setting screen;
FIG. 17 is a diagram illustrating an example of a message displayed on the display screen in a case where a login identifier (ID) is selected in the setting item button;
FIGS. 18A and 18B are diagrams illustrating an example of the file name detailed setting screen in a case where an underscore is inserted between pieces of file name constituting information;
FIGS. 19A and 19B are diagrams illustrating another example of the file name detailed setting screen in a case where the underscore is inserted between the pieces of file name constituting information;
FIG. 20A is a diagram illustrating an example of a display screen in a state in which the underscore is inserted between the pieces of file name constituting information, and FIG. 20B is a diagram illustrating an example of a display screen in a state in which the underscore is not inserted between the pieces of file name constituting information;
FIG. 21A is a diagram illustrating an example of a file name editing screen in a case where the file name is reset;
FIG. 21B is a diagram illustrating an example of a file name detailed setting screen in a case where a detailed setting button is operated;
FIG. 22A is a diagram illustrating an example of the file name editing screen in a case where the file name is reset;
FIG. 22B is a diagram illustrating an example of a confirmation screen in a case where the file name button is operated;
FIG. 23A is a diagram illustrating an example of the file name editing screen at the time of manual input;
FIG. 23B is a diagram illustrating an example of a display screen after the file name is reset by manual input;
FIG. 24A is a diagram illustrating an example of the file name detailed setting screen in a case where the detailed setting button is operated;
FIG. 24B is a diagram illustrating an example of the file name editing screen at the time of manual input;
FIG. 24C is a diagram illustrating an example of the display screen after re-editing by manual input;
FIG. 25A is a diagram illustrating an example of the file name detailed setting screen in a case where there is a blank field in the setting item; and
FIG. 25B is a diagram illustrating an example of the display screen after re-editing in a case where there is a blank field in the setting item.

The accompanying drawings are intended to depict embodiments of the present invention and should not be interpreted to limit the scope thereof. The accompanying drawings are not to be considered as drawn to scale unless explicitly noted.

### DESCRIPTIONS OF EMBODIMENTS

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Hereinafter, embodiments for carrying out the invention are described with reference to the drawings. In the description of the drawings, the same elements are denoted by the same reference numerals, and if there is an overlapping portion, the description thereof is omitted.

### First Embodiment

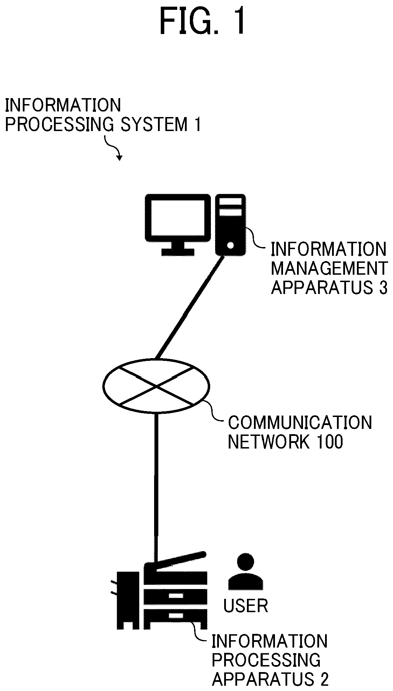

A first embodiment is described with reference to FIGS. 1 to 17.

### General Arrangement of Information Processing System

FIG. 1 is a general arrangement diagram illustrating an example of an information processing system. As illustrated in FIG. 1, an information processing system 1 includes apparatuses including an information processing apparatus 2 and an information management apparatus 3. The information processing apparatus 2 and the information management apparatus 3 are connected to each other via a communication network 100. Herein, the communication network 100 is constructed by the Internet, a mobile communication network, a local area network (LAN) and the like. The communication network 100 may include a network by wireless communication such as 3rd generation (3G), 4th generation (4G), 5th generation (5G), Worldwide Interoperability for Microwave Access (WiMAX), or long term evolution (LTE) in addition to wired communication.

### Information Processing Apparatus

The information processing apparatus 2 is a multifunction peripheral (MFP: multifunction peripheral/printer/product) an example of which is an image forming apparatus, and reads a document and generates scan data from the read document, for example. The information processing apparatus 2 may be a scanner having a single scan function. The information processing apparatus 2 may further be an apparatus having a function of generating a file name, a subject, a destination and the like when receiving data or a file, such as a facsimile apparatus having a facsimile function, an apparatus having a document box function, or an apparatus having a function of transferring after scanning. The information processing apparatus 2 may be a generally used personal computer (PC) or may be an apparatus having a function of generating the file name when generating data or a file. In this manner, the file name is a name that is set and generated according to processing including reading of a document, facsimile transmission/reception, storage in a storage after reading the document, mail sending after reading the document, and file generation.

### Information Management Apparatus

The information management apparatus 3 is implemented by an information processing apparatus (computer system) equipped with a general OS and having a server function. The information management apparatus 3 may communicate with the information processing apparatus 2, and shares various types of setting information set by the information processing apparatus 2, for example. The information management apparatus 3 may be a generally used personal computer (PC). That is, as the information management apparatus 3, a communication terminal including a display and may operate software such as browser software may be used. As a result, a user may also operate the display of the information management apparatus 3 to set the file name according to this embodiment.

### Regarding Terms

In this embodiment, a "setting item input unit" refers to a plurality of input units formed of operation buttons, operation icons and the like representing setting items for setting the file name displayed on an operation panel (display) of the information processing apparatus 2. That is, the setting item input unit has a function of an operation key for setting predetermined information, numerical values and the like forming the file name. The user may press or tap each of the plurality of setting item input units to input or set predetermined information, numerical values and the like provided to each of a plurality of setting item input units.

### Hardware Configuration

### Hardware Configuration of Information Processing Apparatus

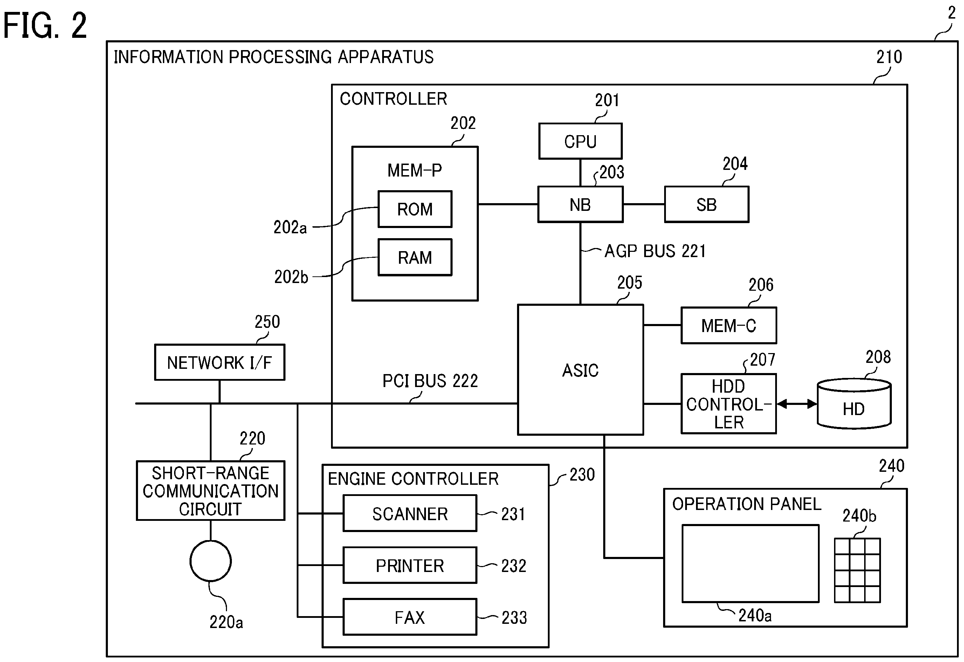

FIG. 2 is a diagram illustrating an example of a hardware configuration of the information processing apparatus. The information processing apparatus 2 is, for example, the MFP, and is provided with hardware resources including a controller 210, a short-range communication circuit 220, an engine controller 230, an operation panel 240, and a network interface (I/F) 250 as illustrated in FIG. 2.

Among them, the controller 210 includes a central processing unit (CPU) 201 being a substantial part of a computer, a system memory (MEM-P) 202, a north bridge (NB) 203, a south bridge (SB) 204, an application specific integrated circuit (ASIC) 205, a local memory (MEM-C) 206 being a memory, a hard disk drive (HDD) controller 207, and a hard disk (HD) 208 being a memory, in which the NB 203 and the ASIC 205 are connected by an accelerated graphics port (AGP) bus 221.

Among them, the CPU 201 is a controller that generally controls the information processing apparatus 2. The NB 203 is a bridge for connecting the CPU 201, the MEM-P 202, the SB 204, and the AGP bus 221, and includes a memory controller that controls reading and writing from and to the MEM-P 202, a peripheral component interconnect (PCI) master, and an AGP target.

The MEM-P 202 includes a read only memory (ROM) 202a being a memory for storing programs and data for implementing each function of the controller 210, and a random access memory (RAM) 202b in which programs and data are expanded and used as a drawing memory at the time of memory printing. The program stored in the RAM 202b may be recorded in a computer-readable recording medium such as a compact disc (CD)-ROM, a CD-recordable (R), and a digital versatile disc (DVD) as a file in an installable format or an executable format to be provided.

The SB 204 is a bridge for connecting the NB 203 to a PCI device and a peripheral device. The ASIC 205 is an integrated circuit (IC) for image processing including hardware elements for image processing, and serves as a bridge that connects the AGP bus 221, a PCI bus 222, the HD 208, and the MEM-C 206. The ASIC 205 includes a PCI target, an AGP master, an arbiter that arbitrates driving timing of each signal according to a predetermined priority in the ASIC 205, a memory controller that controls the MEM-C 206, a plurality of direct memory access controllers (DMACs) that rotates image data by hardware logic and the like, and a PCI unit that performs data transfer between the same and a scanner 231 and a printer 232 via the PCI bus 222. To the ASIC 205, a universal serial bus (USB) interface or an Institute of Electrical and Electronics Engineers 1394 (IEEE 1394) interface maybe connected.

The MEM-C 206 is a local memory used as a copy image buffer and a code buffer. The HD 208 is a storage for accumulating image data, accumulating font data used at the time of printing, and accumulating forms. The HD 208 controls reading or writing of data from or to the HD 208 under the control of the CPU 201. The AGP bus 221 is a bus interface for a graphics accelerator card proposed for speeding up graphics processing, and may directly access the MEM-P 202 with high throughput to speed up the graphics accelerator card.

The short-range communication circuit 220 is provided with a short-range communication circuit antenna 220a. The short-range communication circuit 220 is a communication circuit such as near field communication (NFC) or Bluetooth (registered trademark, hereinafter omitted).

The engine controller 230 is formed of the scanner 231, the printer 232, and a facsimile (FAX) 233. The operation panel 240 is provided with a panel display 240a such as a touch panel that displays a current set value, a selected screen and the like and accepts an input from an operator, and an operation panel 240b including a numeric keypad that accepts a set value of a condition regarding image formation such as a density setting condition, a start key that accepts a copy start instruction and the like. The controller 210 generally controls the information processing apparatus 2, and controls, for example, drawing, communication, input from the operation panel 240 and the like. The scanner 231 or the printer 232 includes an image processor for error diffusion and gamma (γ) conversion. The FAX 233 includes an analog I/F for performing facsimile communication using an analog line (public line) connecting to a communication device having a facsimile communication function, a modem (MODEM), a speaker and the like.

The information processing apparatus 2 may sequentially switch to select a document box function, a copy function, a printer function, and a facsimile function by an application switching key of the operation panel 240. A document box mode is set when the document box function is selected, a copy mode is set when the copy function is selected, a printer mode is set when the printer function is selected, and a facsimile mode is set when the facsimile mode is selected.

The network I/F 250 is an interface for performing data communication using the communication network 100. The short-range communication circuit 220 and the network I/F 250 are electrically connected to the ASIC 205 via the PCI bus 222. The information processing apparatus 2 is not limited to the MFP, and as described above, an electronic white board (interactive whiteboard (IWB)), a projector, a television (web) conference system (UCS) and the like may be provided, and each of them may have a unique hardware configuration.

The program may be recorded in a computer-readable recording medium as a file in an installable format or an executable format, or may be downloaded via a network to be distributed. Examples of the recording medium include a compact disc recordable (CD-R), a digital versatile disk (DVD), a Blu-ray disc, a secure digital (SD) card, a USB memory and the like. The recording medium may be provided within the country or abroad as a program product. For example, the information processing apparatus 2 executes the program according to the present disclosure to implement an information processing method according to the present disclosure.

### Hardware Configuration of Information Management Apparatus

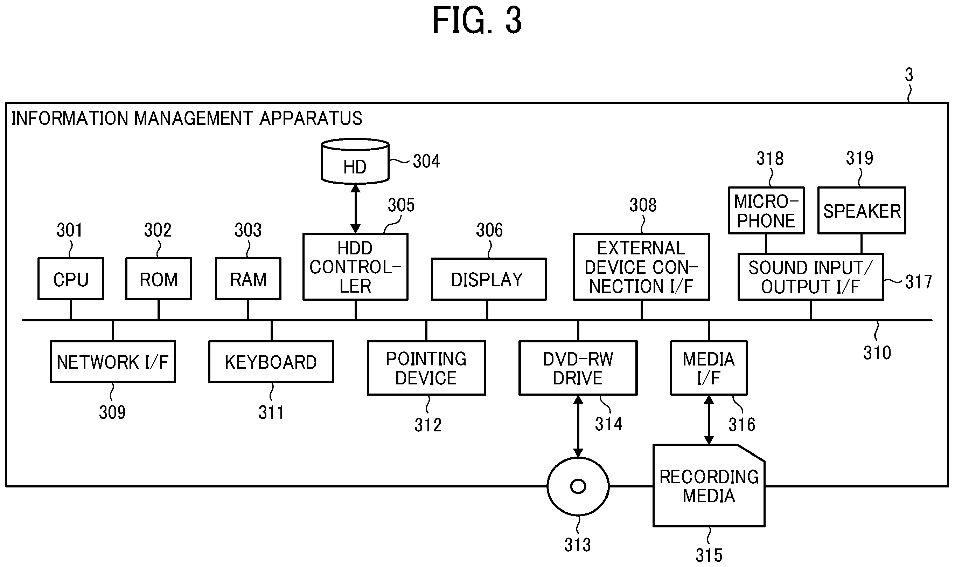

FIG. 3 is a diagram illustrating an example of a hardware configuration of the information management apparatus. As illustrated in FIG. 3, the information management apparatus 3 as an example of a computer is provided with hardware resources including a CPU 301, a ROM 302, a RAM 303, an HD 304, an HDD controller 305, a display 306, an external device connection I/F 308, a network I/F 309, a keyboard 311, a pointing device 312, a digital versatile disk-rewritable (DVD-RW) drive 314, a media I/F 316, a microphone 318, a speaker 319, a sound input/output I/F 317, and a bus line 310.

Among them, the CPU 301 generally controls an operation of the information management apparatus 3. The ROM 302 stores a program used for driving the CPU 301. The RAM 303 is used as a work area of the CPU 301. The HD 304 stores various data such as programs. The HDD controller 305 controls reading or writing (storage) of various data from and to the HD 304 according to the control of the CPU 301. The display 306 displays various types of information such as a cursor, a menu, a window, a character, a numeric keypad, an execution key, or an image. The display 306 is an example of a display. The external device connection I/F 308 is an interface for connecting various external devices. The external device in this case is, for example, a USB memory or a USB device. The network I/F 309 is an interface for performing data communication using the communication network 100. The bus line 310 is an address bus or a data bus for electrically connecting the respective components such as the CPU 301.

The network I/F 309 is an interface for performing data communication using the communication network 100. The keyboard 311 is a type of input device provided with a plurality of keys for inputting a character, a numerical value, various instructions and the like. The pointing device 312 is a type of input device that selects or executes various instructions, selects a processing target, moves a cursor. The input device may be a touch panel, an audio input device and the like in addition to the keyboard 311 and the pointing device 312. The DVD-RW drive 314 controls reading or writing of various data from or to a DVD-RW 313 as an example of a detachable recording medium. This is not limited to DVD-RW, and may be DVD-R or Blu-ray (registered trademark) disc and the like.

The media I/F 316 controls reading or writing (storage) of data from or to a recording medium 315 such as a flash memory. The microphone 318 is a type of audio input device that inputs an audio and an ambient sound (sound signal). The speaker 319 is a type of audio output device that outputs an output sound signal obtained by converting an input sound signal. The sound input/output I/F 317 is a circuit that processes input/output of the sound signal between the microphone 318 and the speaker 319 under the control of the CPU 301.

### Functional Configuration of Information Processing System

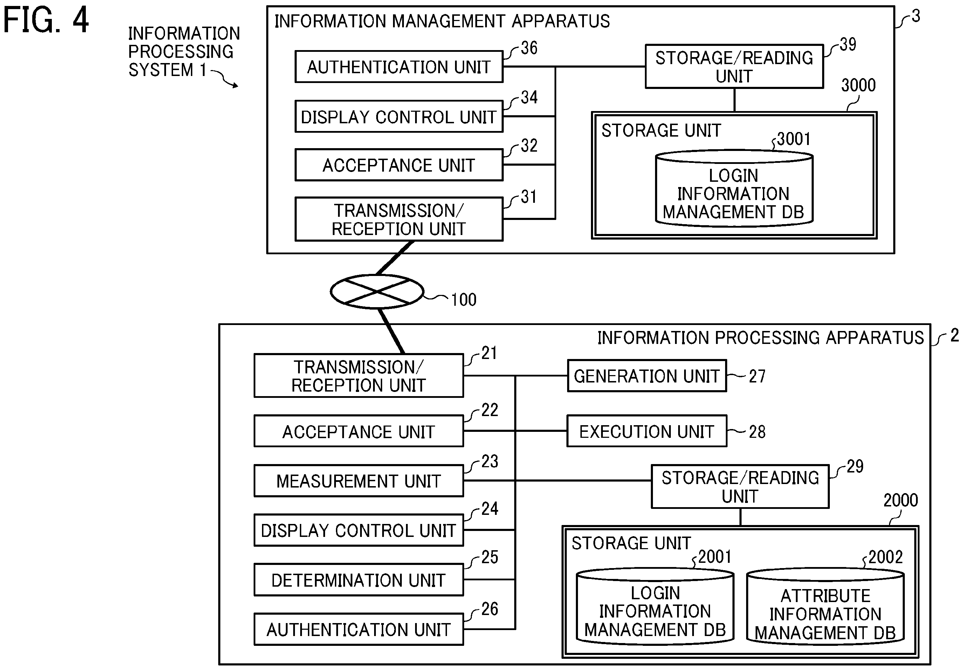

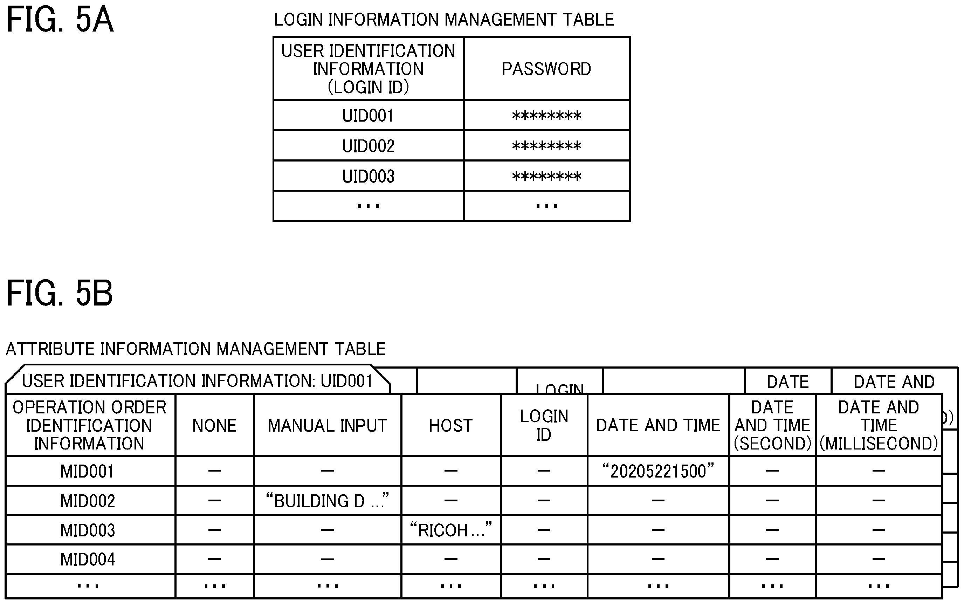

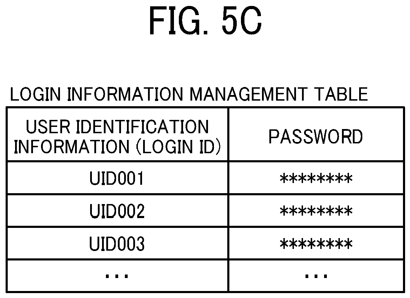

Next, a functional configuration of the first embodiment is described with reference to FIGS. 4 and 5. FIG. 4 is a diagram illustrating an example of a functional configuration of the information processing system.

### Functional Configuration of Information Processing Apparatus

As illustrated in FIG. 4, the information processing apparatus 2 includes a transmission/reception unit 21, an acceptance unit 22, a measurement unit 23, a display control unit 24, a determination unit 25, an authentication unit 26, a generation unit 27, and a storage/reading unit 29. Each of these functional units is a function or a unit implemented by any one of the hardware resources illustrated in FIG. 2 operating according to a command from the CPU 201 according to a program for the information processing apparatus 2 expanded in the RAM 202b from at least one of the ROM 202a and the HD 208. The information processing apparatus 2 includes a storage unit 2000 constructed by at least one of the ROM 202a and the HD 208 illustrated in FIG. 2. The storage unit 2000 stores an information processing program executed by the information processing apparatus 2, and functional applications for executing a scan function, a print function, and a facsimile communication function. The application including scan processing includes, for example, an application that stores scan data in the information processing apparatus 2 after executing scan (also referred to as document reading operation). The application including the scan processing further includes an application that causes the information management apparatus 3 connected to the information processing apparatus 2 via the communication network 100 to store the scan data. The application including the scan processing further includes an application that sends the scan data to a desired mail address by mail and an application that transmits the scan data to a destination of a desired FAX number by FAX, for example.

### Login Information Management Table

FIG. 5A is a conceptual diagram illustrating an example of a login information management table. In the storage unit 2000, a login information management database (DB) 2001 formed of the login information management table as illustrated in FIG. 5A is constructed. In the login information management table, a password corresponding to user identification information (login ID) is stored and managed in association with the user identification information. Among them, the user identification information is information for identifying the user who uses the information processing apparatus 2, for which the login ID is usually used; for example, this is given as information obtained by combining a character and a number such as UID001 and UID002. The password is information in a case where predetermined login processing is performed using the user identification information, and is code information including a certain number of characters. The login information management DB 2001 is also constructed as a login information management DB 3001 in the information management apparatus 3 to be described later, and in a case where the login information management DB 3001 is not constructed in the information management apparatus 3, login processing is performed using the login information management DB 2001.

### Attribute Information Management Table

FIG. 5B is a conceptual diagram illustrating an example of an attribute information management table. In the storage unit 2000, an attribute information management DB 2002 formed of the attribute information management table as illustrated in FIG. 5B is constructed. In the attribute information management table, with the user identification information as a tab, each attribute information of "none", "manual input", "host", "login ID", "date and time", "date and time (second)", and "date and time (millisecond)" is stored to be managed in association with each operation order identification information divided by each tab. Among them, the operation order identification information is information indicating an operation order on a plurality of setting items displayed on a file name detailed setting screen to be described later, and is provided by, for example, MID001, MID002 and the like. Note that, it is not limited to such a table configuration, and the attribute information management table may be shared by a plurality of users. In this case, it is not required that the user identification information is divided as tabs.

When generating the attribute information management table forming the attribute information management DB 2002, the following method may be considered, for example. The generation unit 27 first generates "manual input", "host", "login ID", "date and time", "date and time (second)", and "date and time (millisecond)" as an example of attribute information forming a scan file name to be assigned to the scan data. These pieces of attribute information are examples of information indicating a descriptive property of the file name. That is, these pieces of attribute information are pieces of information indicating what type of file is generated and when and by whom the file is generated. The storage/reading unit 29 expands the attribute information generated in this manner in the attribute information management DB 2002 constructed in a predetermined area of the storage unit 2000 to form a data table. Thereafter, the display control unit 24 performs pop-up display of a plurality of pieces of attribute information managed in the attribute information management table as a dialogue screen on the panel display 240a of the operation panel 240 corresponding to an operation timing on the plurality of setting items. The method is not limited to the generation method described above, and the user may set each attribute information for the information processing apparatus 2 in advance. As for an UI at the time of setting, it is possible to directly input from the information processing apparatus 2 main body, or remotely input from another apparatus, terminal and the like.

As for the use of the attribute information management DB 2002, for example, the following method may be further considered. The generation unit 27 and the storage/reading unit 29 store and manage the operation order and an operation content input or set for the attribute information displayed in each of the plurality of setting item input units in each item managed in the attribute information management table. As a result, each attribute information of the attribute information management table is updated and managed. That is, in the item of the attribute information of "date and time", "20205221500" is displayed only in the item of "date and time" corresponding to MID001; this is because this is the item input or set to a first setting item input unit (first input) by the user, and if this is the item input or set to a second setting item input unit (second input) by the user, "20205221500" is displayed in the item of "date and time" corresponding to MID002. The generation method and use of the attribute information management DB 2002 are not limited to the above-described content, and different data table structures and specifications may be adopted according to setting date and time (scan date and time) and setting content by the user. A management method that does not use the data table structure as described above may also be used.

"None" among the pieces of attribute information generated by the above-described generation method is an item in a case where there is no input in the setting item or no setting target.

"Manual input" is information arbitrarily given by a keyboard operation and the like by the user when the file name is generated. In this embodiment, for example, information such as "multifunction peripheral in building D" is given as the information of "manual input".

"Host" is information regarding the information processing apparatus 2 representing a host name of the information processing apparatus 2 and the like, and is given as, for example, "RICOH" and the like. Note that, the item managed by "host" is not limited to the above-described example, and may be given by an alphanumeric character, a special character, a symbol, a mail address, an IP address and the like. It is also possible that the information of the host is not managed by the attribute information management DB 2002 (refer to FIG. 5B). In this case, in the attribute information management DB 2002, information indicating reference to setting of the host, information indicating a memory area in which the setting of the host is stored and the like may be stored instead of the information of the host.

"Login ID" represents the user identification information (login ID) of the user who executes the scan. Note that, there is a case where the user who creates the attribute information management table is different from the user who actually executes the scan and the like and assigns the file name to the file. Therefore, the login ID may be information for indicating reference to the user identification information of the user who is logging in.

In "date and time", "date and time (second)", and "date and time (millisecond)", current date and time information in the information processing apparatus 2 or date and time information input or set in the past is managed. In a case where the user selects "date and time" when generating the file name, the date and time when the scan is executed is set as the file name. Herein, the date and time when the scan is executed includes, for example, the date and time when the user indicates execution of the scan, the date and time when the scan data is generated, and the date and time when the scan data is transmitted to a predetermined destination or stored. In a part of "sample:" in a file name display unit 2211 or a file name display unit 2311, information on the date and time when file name detailed setting is performed may be displayed, but the file name set for actual scan data is set on the basis of the date and time when the scan described above is executed. That is, sample information at the time of scan setting might be different from the file name actually assigned to the file. For example, in "date and time", for example, this is given as information such as "20205221500". Furthermore, in "date and time (second)" and "date and time (millisecond)", information of second and millisecond is added to the above-described information, respectively. That is, in a case where the date and time (millisecond) is selected, it is possible to set, in addition to year/month/day, time, and minute when the scan is executed, information of millisecond unit may be set as the file name. Note that, since the generated file name becomes redundant, any or all of year, month, and day may be omitted. Note that, the date and time when the attribute information management table is created might be different from the date and time when the file name is generated for the file actually obtained by scan and the like. For this reason, "date and time" may be information for indicating reference to the date and time information at the time when the scan is executed or at the time when the file name is generated.

### Each Functional Configuration of Information Processing Apparatus

Next, each functional configuration of the information processing apparatus 2 is described in detail. The transmission/reception unit 21 of the information processing apparatus 2 illustrated in FIG. 4 is mainly implemented by processing of the CPU 201 on the network I/F 250 illustrated in FIG. 2, and this transmits/receives various data (or pieces of information) to/from the information management apparatus 3 via the communication network 100. In this embodiment, the transmission/reception unit 21 serves as an example of at least one of a transmission unit and a reception unit.

The acceptance unit 22 is mainly implemented by the CPU 201 processing signals generated by various operations accepted by the operation panel 240b of the operation panel 240 illustrated in FIG. 2, and accepts operations on various buttons and the like operated by the user. In this embodiment, the acceptance unit 22 serves as an example of an acceptance unit.

The measurement unit 23 is mainly implemented by the processing of the CPU 201 illustrated in FIG. 2, and obtains current date and time by a clock function generated by a clock of the CPU 201 or a clock function based on time information externally obtained. In this embodiment, the measurement unit 23 serves as an example of a measurement unit.

The display control unit 24 is mainly implemented by the processing of the CPU 201 on the panel display 240a of the operation panel 240 illustrated in FIG. 2, and displays various pieces of information managed by the information processing apparatus 2 or input to the information processing apparatus 2 on the operation panel 240. In this embodiment, the display control unit 24 serves as an example of a display control unit. The panel display 240a of the operation panel 240 serves as an example of a display.

The determination unit 25 is mainly implemented by the processing of the CPU 201 illustrated in FIG. 2, and performs various determinations in the information processing apparatus 2. In this embodiment, the determination unit 25 serves as an example of a determination unit.

The authentication unit 26 is mainly implemented by the processing of the CPU 201 illustrated in FIG. 2, and performs authentication processing and the like for the user who uses the information processing apparatus 2. In this embodiment, the authentication unit 26 serves as an example of an authentication unit.

The generation unit 27 is mainly implemented by the processing of the CPU 201 illustrated in FIG. 2, and generates various screen data, scan data and the like in the information processing apparatus 2. In this embodiment, the generation unit 27 serves as an example of a generation unit.

The execution unit 28 is mainly implemented by the processing of the CPU 201 illustrated in FIG. 2, and this activates a scan application stored in the storage unit 2000 and controls the scanner 231 of the engine controller 230 to implement the scan function. The execution unit 28 further activates a printer application stored in the storage unit 2000 and controls the printer 232 of the engine controller 230 to implement the print function. The execution unit 28 further activates a FAX application stored in the storage unit 2000 and controls the FAX 233 of the engine controller 230 to implement the facsimile communication function.

The storage/reading unit 29 is mainly implemented by the processing of the CPU 201 on at least one of the ROM 202a and the HD 208 illustrated in FIG. 2, and stores various data (or information) in the storage unit 2000 and reads the various data (or information) from the storage unit 2000. In this embodiment, the storage/reading unit 29 serves as an example of a storage/reading unit.

### Functional Configuration of Information Management Apparatus

As illustrated in FIG. 4, the information management apparatus 3 includes a transmission/reception unit 31, an acceptance unit 32, a display control unit 34, an authentication unit 36, and a storage/reading unit 39. Each of these functional units is a function or a unit implemented by any one of the hardware resources illustrated in FIG. 3 operating according to a command from the CPU 301 according to a program for the information management apparatus 3 expanded from at least one of the ROM 302 and the HD 304 in the RAM 303. The information management apparatus 3 includes a storage unit 3000 constructed by the ROM 302 or the HD 304 illustrated in FIG. 3.

### Login Information Management Table

FIG. 5C is a conceptual diagram illustrating an example of a login information management table. In the storage unit 3000, a login information management DB 3001 formed of the login information management table as illustrated in FIG. 5C is constructed. In the login information management table, a password corresponding to the user identification information (login ID) is stored to be managed in association with the user identification information. Among them, the user identification information is information for identifying the user who uses the information processing apparatus 2, for which the login ID is usually used; for example, this is given as information obtained by combining a character and a number such as UID001 and UID002. The password is information in a case where predetermined login processing is performed using the user identification information, and is code information formed of a certain number of characters.

### Each Functional Configuration of Information Management Apparatus

Next, each functional configuration of the information management apparatus 3 is described in detail. The transmission/reception unit 31 of the information management apparatus 3 illustrated in FIG. 4 is mainly implemented by processing of the CPU 301 on the external device connection I/F 308 and the network I/F 309 illustrated in FIG. 3, and transmits/receives various data (or information) to/from the information processing apparatus 2 via the communication network 100. In this embodiment, the transmission/reception unit 31 serves as an example of at least one of a transmission unit and a reception unit.

The acceptance unit 32 is mainly implemented by the CPU 301 processing signals generated by various operations accepted by the keyboard 311 and the pointing device 312 illustrated in FIG. 3, and accepts various button operations and the like when inputting, setting, and changing the file name operated by the user. In this embodiment, the acceptance unit 32 serves as an example of an acceptance unit.

The display control unit 34 is mainly implemented by the processing of the CPU 301 on the display 306 illustrated in FIG. 3, and performs screen display control in each processing performed in the information management apparatus 3. In this embodiment, the display control unit 34 serves as an example of a display control unit.

The authentication unit 36 is mainly implemented by the processing of the CPU 301 illustrated in FIG. 3, and collates the corresponding password with the user identification information transmitted by the information processing apparatus 2 to perform the authentication processing of the user. In this embodiment, the authentication unit 36 serves as an example of an authentication unit.

The storage/reading unit 39 is mainly implemented by the processing of the CPU 301 on at least one of the ROM 302 and the HD 304 illustrated in FIG. 3, stores various data (or information) in the storage unit 3000, and reads various data (or information) from the storage unit 3000. In this embodiment, the storage/reading unit 39 serves as an example of a storage/reading unit.

### Processing or Operation of Embodiment

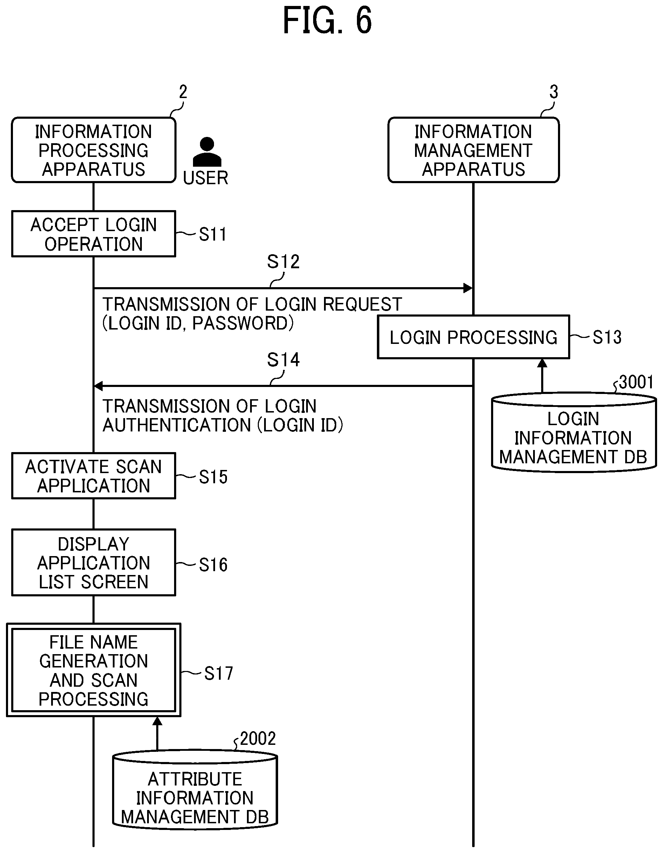

Next, each processing or operation in the information processing system according to the first embodiment is described with reference to FIGS. 6 to 17. In the first embodiment, processing of setting the file name to the file generated by the user performing scan using the information processing apparatus 2, and transmitting (transferring) the file to which the file name is set to the outside to store is described. FIG. 6 is a sequence diagram illustrating an example of general processing.

### Login and Scan Application Activation Processing

The user first performs a login operation using the operation panel 240 of the information processing apparatus 2. As a result, the acceptance unit 22 of the information processing apparatus 2 accepts the login operation by the user operation (step S11).

Subsequently, the transmission/reception unit 21 transmits a login request input by the user to the information management apparatus 3 (step S12). As a result, the transmission/reception unit 31 of the information management apparatus 3 receives the login request transmitted by the information processing apparatus 2. At that time, the login request includes the login ID and the password of the user.

The authentication unit of the information management apparatus 3 that receives the login request searches the login information management DB 3001 (refer to FIG. 5C) using the received login ID and password as a search key, thereby confirming match of the corresponding login ID and password to authenticate the user (step S13).

After executing the login processing and completing the authentication processing of the user, the transmission/reception unit 31 returns (transmits) a result of the login authentication to the information processing apparatus 2 (step S14). As a result, the transmission/reception unit 21 of the information processing apparatus 2 receives the result of the login authentication (login success) transmitted by the information management apparatus 3. At that time, a message indicating that the login processing is successful may be displayed on the panel display 240a of the operation panel 240 of the information processing apparatus 2.

When the login processing is successful, the user of the information processing apparatus 2 performs an operation of activating the scan application in the information processing apparatus 2. As a result, the execution unit 28 activates the scan application managed in the storage unit 2000 and executes a scan program (step S15).

After the scan application is activated by the execution unit 28, the display control unit 24 displays a scan setting screen to be described later on the panel display 240a (step S16).

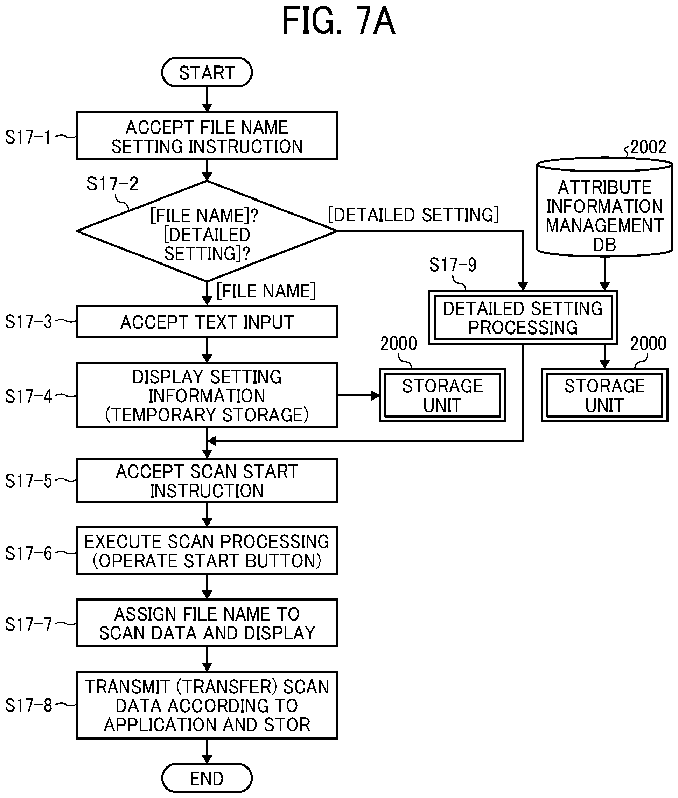

Subsequently, each functional unit of the information processing apparatus 2 executes file name generation and scan processing on the basis of various pieces of information input or set by the user (step S17). Step S17 is described in detail with reference to a flowchart in FIG. 7A.

In the information processing system according to this embodiment, for example, in a case where the processing at steps S12 and S14 described above is executed, another apparatus and the like may be present between the information processing apparatus 2 and the information management apparatus 3. That is, each piece of information (data) transmitted and received between the information processing apparatus 2 and the information management apparatus 3 may be transmitted and received via another apparatus. The above-described configuration and processing method are also applicable to other processing steps between the information processing apparatus 2 and the information management apparatus 3.

### Screen Display Example

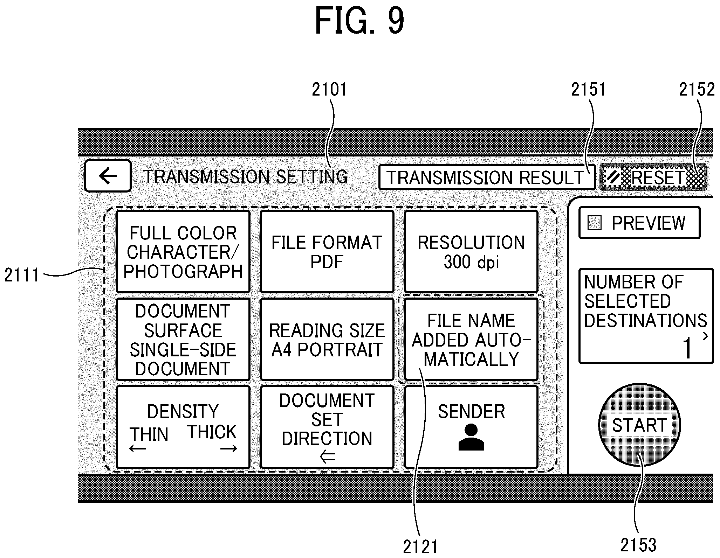

FIG. 9 is a diagram illustrating an example of the scan setting screen after the scan application is activated. As illustrated in FIG. 9, when the scan application is activated by the user, the display control unit 24 displays a scan setting screen 2101 regarding the scan application on the panel display 240a. In the scan setting screen 2101, for example, a scan setting area 2111, a transmission result button 2151 for displaying a transmission result of file transmission by the information processing apparatus 2 to an external device and the like, a reset button 2152 for resetting various settings and the like, and a start button 2153 for starting file transmission and the like are displayed. As a result, for example, the user may operate (press, tap and the like; hereinafter simply referred to as "operate") a file name setting button 2121 in the scan setting area 2111 to make transition to a file name editing screen to be described later.

A content displayed in the file name setting button 2121 corresponds to a display content in a file name button 2212 described later. That is, this is a button for editing the file name, and when the file name is in an unset state, "file name added automatically" is displayed by the display control unit 24. In a case where it is input or set as "ABC" using the file name button 2212, "file name ABC" is represented in the file name setting button 2121. In a case where "[date and time]_[host name]_[login ID]" is input or set using the file name button 2212, "file name [date and time]_[host name]_[login ID]" is displayed in the file name setting button 2121. In this manner, text information input or set using the file name button 2212 is added after [file name] in the file name setting button 2121 by the display control unit 24.

### File Name Generation and Scan Processing

FIG. 7A is the flowchart illustrating an example of file name generation processing and scan processing. As illustrated in FIG. 7A, the acceptance unit 22 accepts a file name setting instruction based on an operation on the file name button 2212 to be described later on a file name editing screen 2201 displayed by the operation on the file name setting button 2121 by the user (step S17-1).

Subsequently, the determination unit 25 determines whether the file name button for making transition to the file name editing screen is operated by the user or a detailed setting button for making transition to a file name detailed setting screen is operated (step S17-2).

In a case where it is determined that the file name button for making transition to the file name editing screen is operated (step S17-2; file name), the acceptance unit 22 accepts a text input in a key input unit to which transition is made in a case where the file name button is operated (step S17-3).

After accepting the text input, the storage/reading unit 29 temporarily stores the input text information (setting information) in a predetermined area of the storage unit 2000 (step S17-4). The text information temporarily stored at step S17-4 may be temporarily stored not only in the storage unit 2000 but also in hardware resources (for example, static random access memory (SRAM), erasable programmable read only memory (EPROM) and the like) having another storage function provided in the information processing apparatus 2.

Subsequently, the acceptance unit 22 accepts a scan start instruction from the user (step S17-5). At that time, the acceptance unit 22 accepts an operation on the start button 2153 by the user. Thereafter, the execution unit 28 executes the scan processing (step S17-6). In the information processing apparatus 2, the scan program may be formed to collectively execute the processing at steps S17-5 and S17-6.

Subsequently, the display control unit 24 assigns the file name set at step S17-4 or step S17-9-3 described later to the scan data generated by the scan processing and displays the same on the panel display 240a (step S17-7). For example, the generation unit 27 cooperates with the storage/reading unit 29 to search the attribute information management DB 2002 (refer to FIG. 5B) using the operation order identification information corresponding to the operation order input or set by the user to a plurality of setting item input units as a search key, thereby reading the corresponding attribute information. Specifically, since the attribute information input or set to a first setting item input unit is "date and time" as described later, a detail of the information managed by this "date and time" is "20205221500". Subsequently, since the attribute information input or set to a second setting item input unit is "manual input" as described later, a detail of the information managed by this "manual input" is "multifunction peripheral in building D". Similarly, since the attribute information input or set to a third setting item input unit is "host" as described later, a detail of the information managed by this "host" is "RICOH". At that point in time, the user performs an operation of confirming the setting of the file name (for example, an operation on an OK button), so that the generation unit 27 assigns the file name to the scan data from the information of "20205221500", "multifunction peripheral in building D", and "RICOH", and displays the same on the panel display 240a.

Subsequently, the storage/reading unit 29 transmits (transfers) the scan data to a transmission (transfer) destination according to the scan application, stores the transmitted (transferred) scan data in a predetermined area of the storage unit 2000, and exits this flow (step S17-8).

In contrast, in a case where it is determined that the detailed setting button for making transition to the file name detailed setting screen is operated (step S17-2; detailed setting), the execution unit 28 executes detailed setting processing to be described later, makes transition to step S17-5, and executes processing at step S17-5 and subsequent steps described above (step S17-9). At that time, at step S17-9, the attribute information management DB 2002 (refer to FIG. 5B) is used.

### Screen Display Example

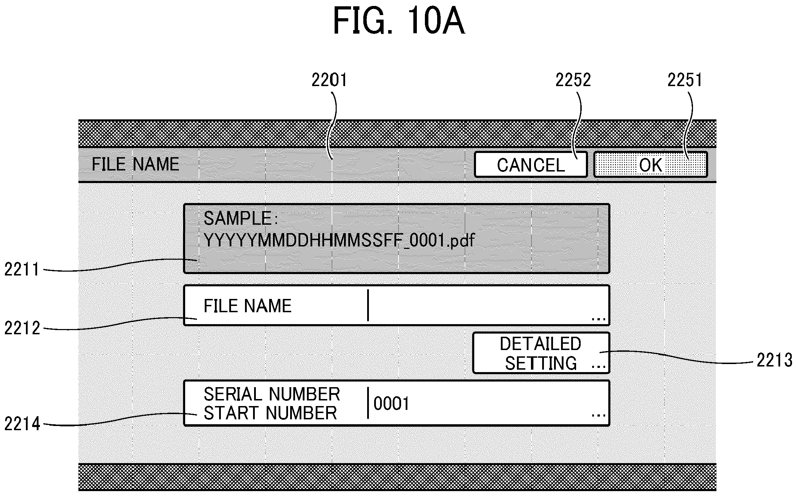

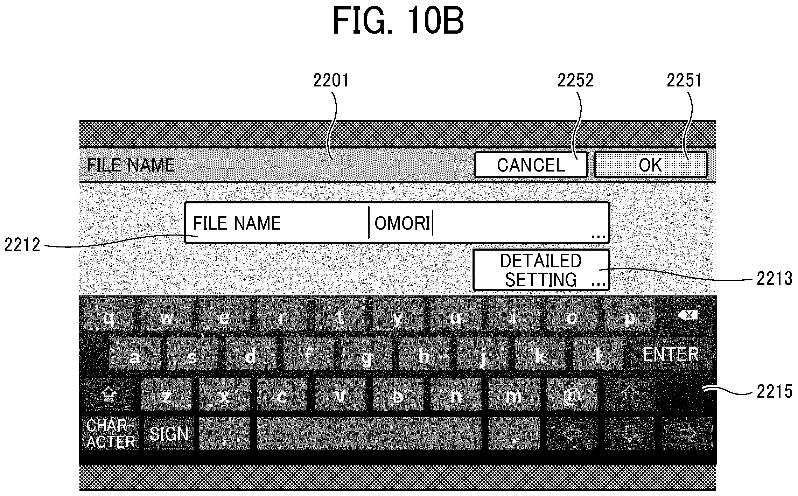

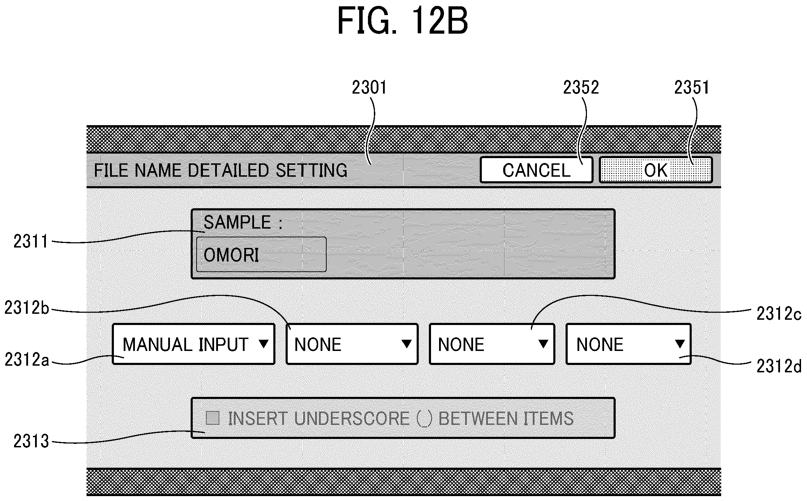

Herein, a screen example displayed on the information processing apparatus 2 in the processing at step S17-3 and subsequent steps described above is described. FIG. 10A is a diagram illustrating an example of the file name editing screen, and FIG. 10B is a diagram illustrating an example of the key input unit in a case where the file name button is operated. As illustrated in FIG. 10A, the display control unit 24 selectively displays a file name input unit (the file name button 2212 is an example of the file name input unit) for inputting one file name and a detailed setting input unit (detailed setting button 2213) for setting one file name on the panel display 240a of the operation panel 240. Then, in a case where an operation on the detailed setting input unit (detailed setting button 2213) is accepted, the display control unit 24 displays a plurality of setting item input units (setting item buttons 2312a, 2312b, 2312c, and 2312d) on the panel display 240a of the operation panel 240. More specifically, the display control unit 24 displays the file name editing screen 2201 on the panel display 240a of the operation panel 240 by the operation of the file name setting button 2121 in FIG. 9. On the file name editing screen 2201, the file name display unit 2211, the file name button 2212, the detailed setting button 2213, a serial number start number display unit 2214, an OK button 2251, and a cancel button 2252 are displayed by the display control unit 24. In the file name display unit 2211, the file name input or set by the user is displayed. The file name button 2212 is a selection button for setting the file name by the text input by the user. The detailed setting button 2213 is a button for making transition to a screen for setting a rule for generating the file name as illustrated in FIG. 12B to be described later. With the detailed setting button 2213, a plurality of setting items is arranged on the screen (FIG. 12B) for setting the rule for generating the file name, and the user may operate them to input or set the file name. In the serial number start number display unit 2214, a number for managing a serial number assigned to the end of the file name is displayed. The OK button 2251 is an operation button for allowing execution of various buttons. The cancel button 2252 is an operation button for canceling the execution of the various buttons. As described above, the file name button 2212 is an example of the file name input unit, and the detailed setting button 2213 is an example of the detailed setting input unit.

As illustrated in FIG. 10B, the display control unit 24 displays the key input unit 2215 on the panel display 240a of the operation panel 240 by the operation of the file name button 2212 by the user. On the panel display 240a, a key input unit 2215 is displayed by the display control unit 24 instead of the serial number start number display unit 2214. Herein, a state in which "Omori" is input by the user is illustrated, and the display control unit 24 displays "Omori" in the file name button 2212 also serving as the display unit. In other input units and setting buttons, the same element assigned with the same reference numeral is not described below.

### Screen Display Example

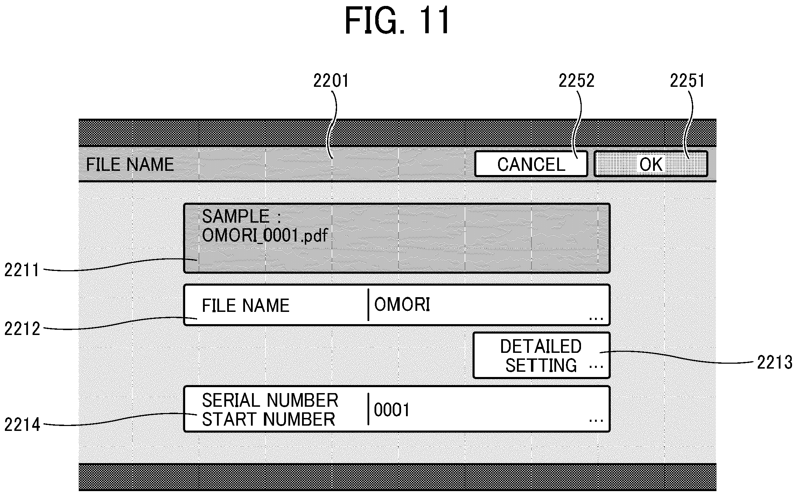

FIG. 11 is a diagram illustrating an example of a file name display screen after being edited by the key input unit. In FIG. 11, a text (in this case, "Omori") input by the user is accepted in the processing at step S17-3 described above and the OK button 2251 is operated, so that the display control unit 24 displays "Omori_0001.pdf" in the file name display unit 2211. "0001" is a serial number start number, which is automatically assigned by the information processing apparatus 2.

### File Name Generation and Scan Processing

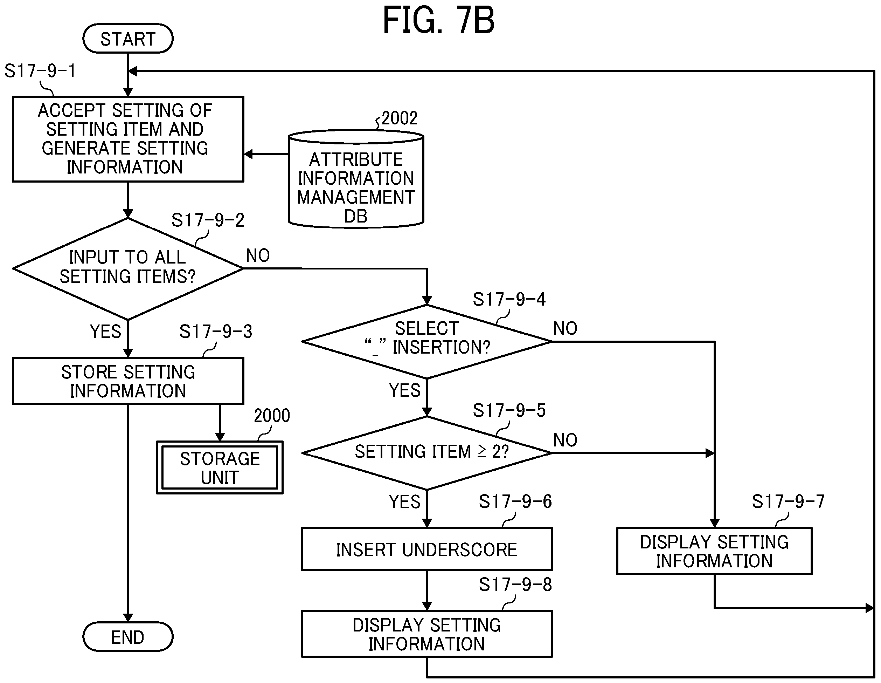

FIG. 7B is a flowchart illustrating an example of the detailed setting processing in the file name generation. As illustrated in FIG. 7B, the acceptance unit 22 accepts a detailed setting instruction based on the operation on the detailed setting button 2213 on the file name editing screen 2201 displayed by the operation on the file name setting button 2121 by the user. Thereafter, the generation unit 27 generates file name constituting information input or set to each setting item displayed after the detailed setting instruction is accepted (step S17-9-1). Specifically, the acceptance unit 22 accepts the operation on the detailed setting button 2213 in the file name editing screen 2201 displayed on the panel display 240a of the operation panel 240 by the display control unit 24. Accordingly, the display control unit 24 switches the screen to a file name detailed setting screen 2301 to be described later, and displays a plurality of setting item input units (setting item buttons 2312a, 2312b, 2312c, and 2312d; hereinafter referred to as the setting item buttons) for setting the file name. Then, the acceptance unit 22 accepts an operation on each setting item input unit (setting item button) by the user. Thereafter, the generation unit 27 generates a plurality of pieces of file name constituting information associated with each other in response to the operation on each of a plurality of setting item input units (setting item buttons), and generates one file name based on the plurality of pieces of file name constituting information generated.

At that time, the generation unit 27 may cooperate with the storage/reading unit 29 to read each attribute information managed by the attribute information management DB 2002 (refer to FIG. 5B), leave the attribute information input or set by the user to each setting item in the attribute information management DB 2002 (refer to FIG. 5B), and erase ("-" display) other pieces of attribute information. In this case, in the first setting item managed by operation order identification information MID001, a state is illustrated in which "date and time" is selected and the corresponding attribute information of "20205221500" is stored and managed. As is described later, in the second setting item managed by operation order identification information MID002, a state is illustrated in which "manual input" is selected and the attribute information of "multifunction peripheral in building D" input as text by the user is stored and managed. Similarly, in the third setting item managed by operation order identification information MID003, a state is illustrated in which "host" is selected and the corresponding attribute information of "RICOH" is stored and managed. In this manner, the attribute information is information including input information by manual input, information for identifying the information processing apparatus 2, login identification information of the user, and date and time information.

Next, the determination unit 25 determines whether input or setting is performed to all the setting items (step S17-9-2). For example, in a case where the acceptance unit 22 accepts an operation on an OK button 2351, the determination unit 25 may determine that the input or setting is performed on all the setting items. In a case where it is determined that the input or the setting is performed on all the setting items (step S17-9-2; YES), the storage/reading unit 29 stores the setting information in a predetermined area of the storage unit 2000 and exits this flow (step S17-9-3).

In contrast, in a case where it is determined that the input or setting is not performed on all the setting items (step S17-9-2; NO), the determination unit 25 further determines whether an insertion of an underscore (_) is selected (step S17-9-4).

Next, in a case where it is determined that the insertion of the underscore (_) is not selected (step S17-9-4; NO), the display control unit 24 displays the file name constituting information input or set to each setting item corresponding to each setting item being an operation target displayed in the file name display unit 2211, and returns to step S17-9-1 (step S17-9-7).

In a case where it is determined that the insertion of the underscore (_) is selected (step S17-9-4; YES), the determination unit 25 further determines whether the number of setting items input or set so far is two or larger(step S17-9-5). In a case where it is determined that the number of setting items input or set so far is not two or larger, that is, in a case where the number of setting items input or set is one, the determination unit 25 determines that there is no need to divide the file name constituting information, and makes transition to step S17-9-7 described above.

In contrast, in a case where it is determined that the number of setting items input or set so far is two or larger(step S17-9-5; YES), the display control unit 24 inserts the underscore (_) between the pieces of setting information set so far, that is, the file name constituting information, in the file name display unit 2211 (step S17-9-6). The display control unit 24 further displays the file name constituting information input or set to each setting item corresponding to each setting item being an operation target displayed in the file name display unit 2211, and returns to step S17-9-1 (step S17-9-8). At step S17-9-8 described above, the display control unit 24 may display the file name constituting information to be displayed in the file name display unit 2211 corresponding to the order input or set to each setting item.

The processing according to the flowchart illustrated in FIGS. 7A and 7B is an example, and it is possible to change the processing content and the processing order within a range conceivable by a person skilled in the art in this embodiment. Hereinafter, an example of screen transition corresponding to the flowchart illustrated in FIG. 7B is described.

### Screen Display Example

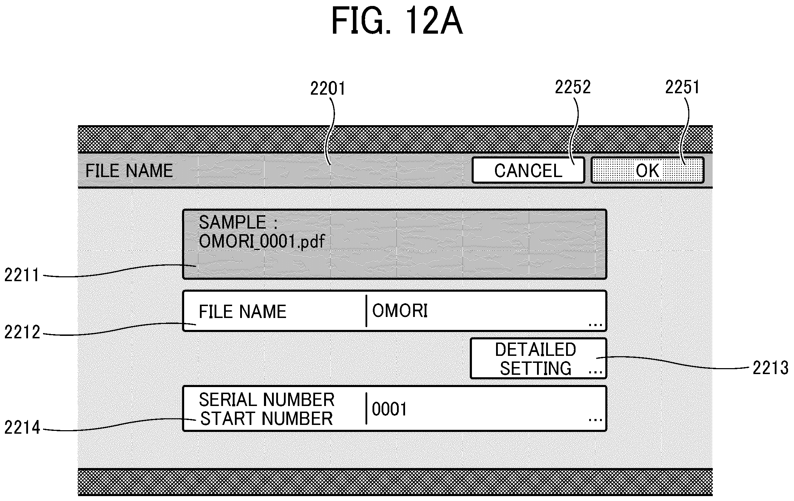

FIG. 12A is a diagram illustrating an example of the file name editing screen, and FIG. 12B is a diagram illustrating an example of the file name detailed setting screen in a case where the detailed setting button is operated. When the user operates the detailed setting button 2213 in a state of the file name editing screen 2201 in FIG. 12A, the display control unit 24 makes transition of the screen to the file name detailed setting screen 2301 in FIG. 12B.

On the file name detailed setting screen 2301 in FIG. 12B, the display control unit 24 displays the file name display unit 2311, the setting item buttons 2312a, 2312b, 2312c, and 2312d, an underscore setting insertion button 2313, the OK button 2351, and a cancel button 2352. The display control unit 24 further displays a plurality of setting item input units (a plurality of setting item buttons 2312) on the file name detailed setting screen 2301, and displays a plurality of pieces of attribute information given to the plurality of setting item buttons 2312 on the file name detailed setting screen 2301.

In the file name display unit 2311, the file name input or set by the user is displayed. The file name display unit 2311 is an example of a file name constituting information display unit. The setting item buttons 2312a, 2312b, 2312c, and 2312d (hereinafter, referred to as the setting item buttons 2312 for convenience if there is no particular reason) are selection buttons for inputting or setting the file name by an operation on a plurality of setting items by the user. The setting item buttons 2312 are an example of a plurality of setting item input units for setting the file name, and four buttons are arranged in this embodiment; but there is no limitation. The display control unit 24 may display a new setting item button as the setting item buttons 2312 when the setting to the fourth setting item button 2312d is finished. The display control unit 24 may further additionally display the setting item button 2312 corresponding to an instruction to add the setting item button (for example, an operation on an "add setting item" button) by the user. The underscore setting insertion button 2313 is a button including a check box for inserting the underscore (_) to be inserted between a plurality of pieces of file name constituting information input or set by the setting item button 2312, and is an example of a delimiter setting insertion unit. By checking this check box, the underscore (_) is inserted between the pieces of file constituting information when a predetermined condition is satisfied. The OK button 2351 and the cancel button 2352 are similar to the OK button 2251 and the cancel button 2252 described above, so that description thereof is omitted.

### Screen Display Example

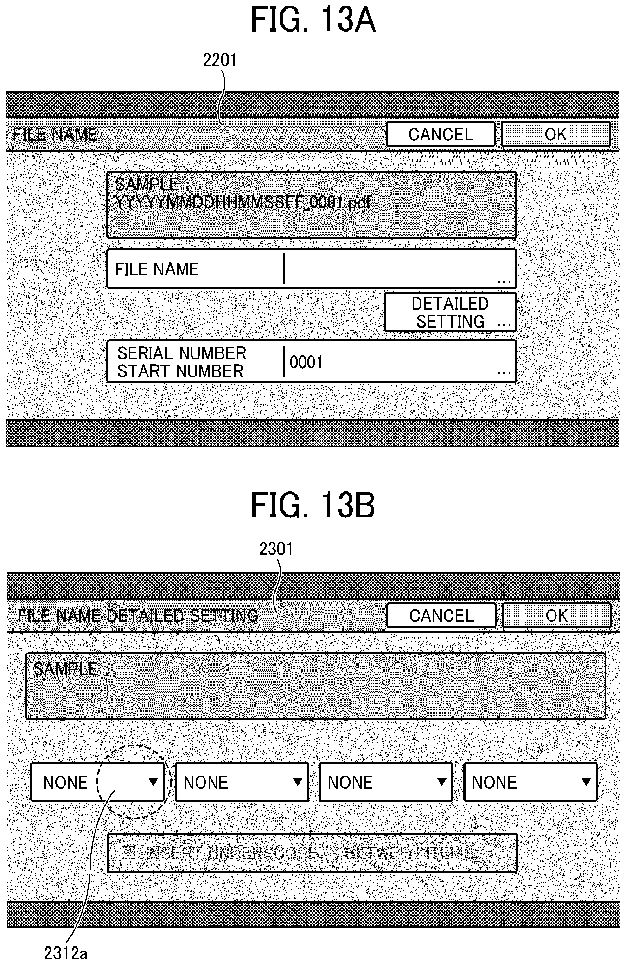

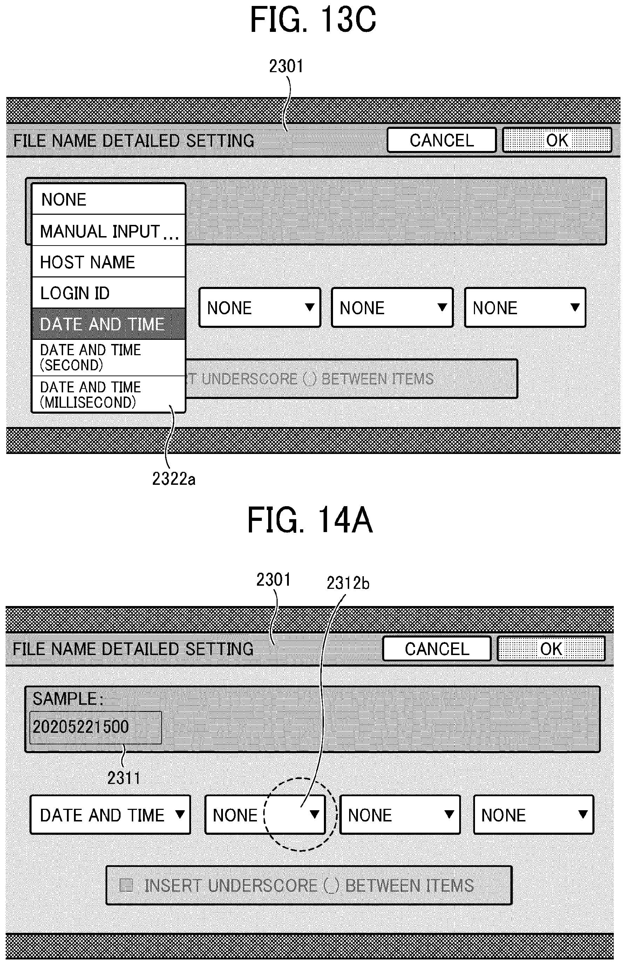

FIG. 13A is a diagram illustrating an example of the file name editing screen, FIG. 13B is a diagram illustrating an example of the file name detailed setting screen in a case where the detailed setting button is operated, and FIG. 13C is a diagram illustrating an example of the file name detailed setting screen while the first setting item buttons is being operated.

As illustrated in FIG. 13A, when the user operates the detailed setting button 2213 in a state in which the file name editing screen 2201 is displayed, the display control unit 24 makes transition to the file name detailed setting screen 2301 in FIG. 13B. Herein, when the user operates a drop-down mark (a downward triangle mark representing a pull-down mark, hereinafter omitted) of the first setting item button 2312a, the acceptance unit 22 detects the same and the display control unit 24 subsequently makes transition to the file name detailed setting screen 2301 in FIG. 13C.

In FIG. 13C, on the first setting item button 2312a operated by the user, pop-up display of an attribute information display button 2322a as a dialogue screen is performed by the display control unit 24. In the attribute information display button 2322a, items of "none", "manual input", "password", "login ID", "date and time", "date and time (second)", and "date and time (millisecond)" are arranged. In this state, a state in which the user selects "date and time", and this may be discriminated from other items is illustrated. Subsequently, after the acceptance unit 22 accepts the operation on the item of "date and time" by the user, the storage/reading unit 29 writes set (selected) information in the item of "date and time" of the operation order identification information (MID0001) managed by the attribute information management DB 2002 (refer to FIG. 5B). For example, the storage/reading unit 29 may write "20205221500", which is information on the date and time when "date and time" is set, in the attribute information display button 2322a. However, there is no limitation, and instruction information for indicating reference to the current time may be written in the item of "date and time".

### Screen Display Example

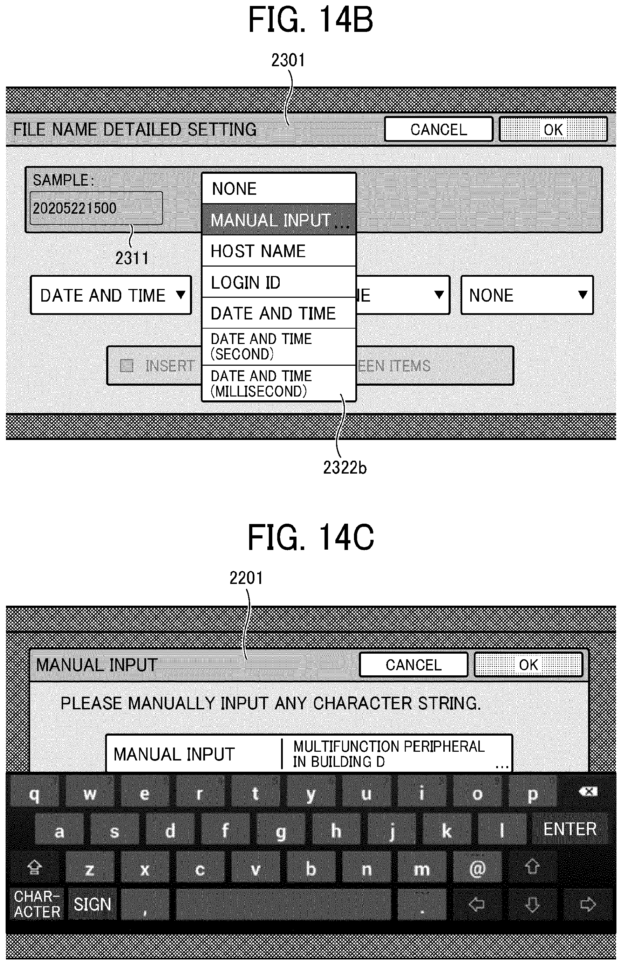

FIG. 14A is a diagram illustrating an example of the file name detailed setting screen after the first setting item button is operated, FIG. 14B is a diagram illustrating an example of the file name detailed setting screen while the second setting item button is being operated, and FIG. 14C is a diagram illustrating an example of the file name detailed setting screen after the second setting item buttons is operated.

In the file name detailed setting screen 2301 in FIG. 14A, the storage/reading unit 29 cooperates with the acceptance unit 22 to search the attribute information management DB 2002 (refer to FIG. 5B) using the operation order identification information MID001 assigned in association with the operation on the first setting item, thereby reading "20205221500" corresponding to "date and time" selected by the user. Thereafter, the display control unit 24 displays read "20205221500" in the file name display unit 2311. At that time, the display control unit 24 displays "20205221500" at the leftmost position the same as that of the first setting item. That is, the display control unit 24 displays a plurality of setting item input units (a plurality of setting item buttons 2312) and the file name constituting information display unit (the file name display unit 2311) that displays a plurality of pieces of file name constituting information generated by the generation unit 27 on the panel display 240a of the operation panel 240 in the same order.

Herein, when the user operates the drop-down mark of the second setting item button 2312b, the acceptance unit 22 detects this, and subsequently the display control unit 24 makes transition to the file name detailed setting screen 2301 in FIG. 14B. In FIG. 14B, on the second setting item button 2312b operated by the user, pop-up display of an attribute information display button 2322b is performed by the display control unit 24. At that time, when the user selects "manual input", the display control unit 24 makes transition of the screen to the file name editing screen 2201 in FIG. 14C.

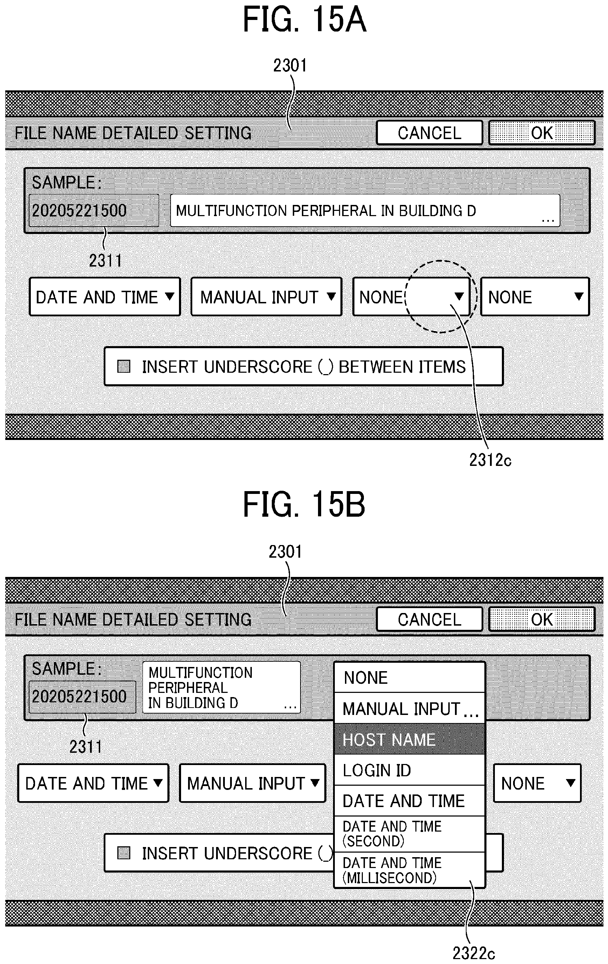

In FIG. 14C, a state in which the user inputs "multifunction peripheral in building D" using the key input unit is displayed. Herein, when the user operates a "confirmation" key of the key input unit, the display control unit 24 may make transition to a screen in FIG. 15A. After the acceptance unit 22 accepts the operation on the item of "manual input" by the user, the storage/reading unit 29 writes information input with the key in the item of "manual input" of the operation order identification information (MID 0002) managed by the attribute information management DB 2002 (refer to FIG. 5B). For example, the storage/reading unit 29 may write text data of "multifunction peripheral in building D" input with the key by the user.

### Screen Display Example

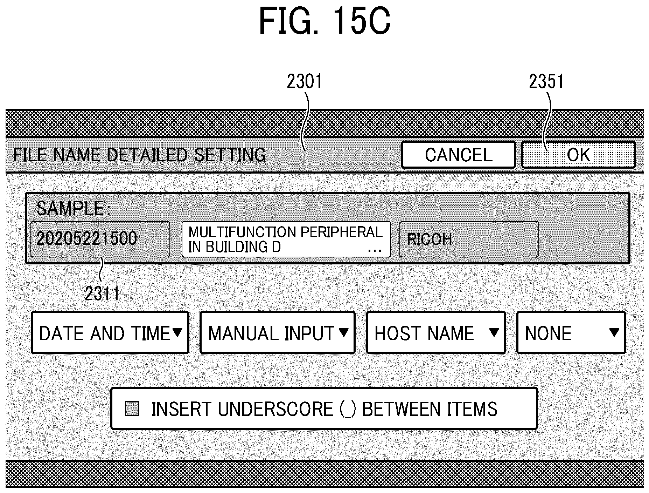

FIG. 15A is a diagram illustrating an example of the file name detailed setting screen after the second setting item button is being operated, FIG. 15B is a diagram illustrating an example of the file name detailed setting screen while the third setting item button is being operated, and FIG. 15C is a diagram illustrating an example of the file name detailed setting screen after the third setting item buttons is operated.

In the file name detailed setting screen 2301 in FIG. 15A, the storage/reading unit 29 cooperates with the acceptance unit 22 to search the attribute information management DB 2002 (refer to FIG. 5B) using the operation order identification information MID002 assigned in association with the operation on the second setting item, thereby reading "multifunction peripheral in building D" corresponding to "manual input" selected by the user. Thereafter, the display control unit 24 displays the read "multifunction peripheral in building D" in the file name display unit 2311. At that time, the display control unit 24 displays "multifunction peripheral in building D" at a second position from the left the same as that of the second setting item. When the user operates the drop-down mark of the third setting item button 2312c in a state in FIG. 15A, the acceptance unit 22 detects this, and subsequently the display control unit 24 makes transition to the file name detailed setting screen 2301 in FIG. 15B.

In FIG. 15B, on the third setting item button 2312c operated by the user, pop-up display of an attribute information display button 2322b is performed by the display control unit 24. At that time, when the user selects "host name", the display control unit 24 makes transition of the screen to the file name detailed setting screen 2301 in FIG. 15C. After the acceptance unit 22 accepts the operation on the item of "host name" by the user, the storage/reading unit 29 writes set (selected) information in the item of "host name" of the operation order identification information (MID0003) managed by the attribute information management DB 2002 (refer to FIG. 5B). For example, the storage/reading unit 29 may write "RICOH" selected by the user. Note that, there is no limitation, and instruction information for indicating reference to the host name set in the information processing apparatus 2 may be input.

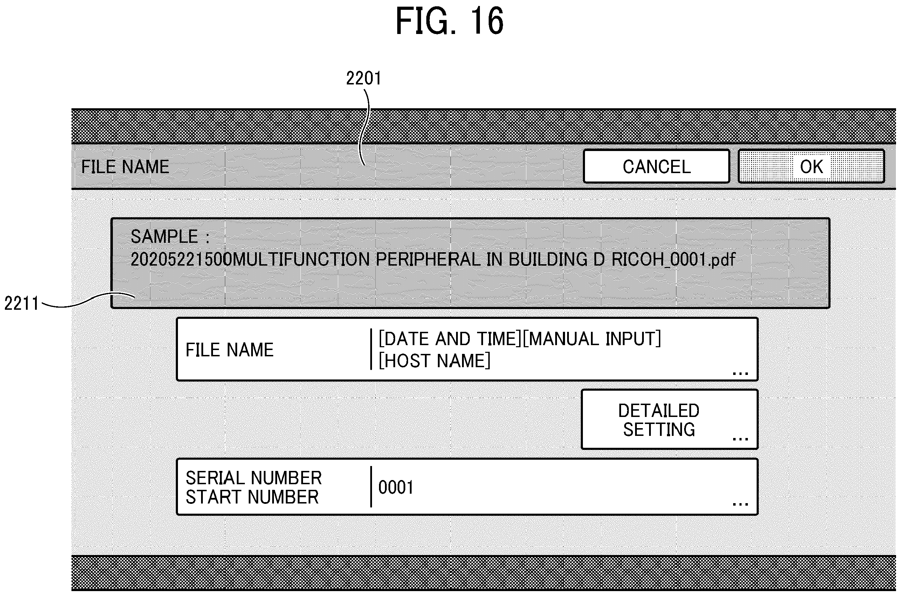

In FIG. 15C, when the user selects the attribute information of "host name", "host name" is displayed in the third setting item button 2312c by the display control unit 24. Together with this, the storage/reading unit 29 cooperates with the acceptance unit 22 to search the attribute information management DB 2002 (refer to FIG. 5B) using the operation order identification information MID003 assigned in association with the operation on the third setting item, thereby reading "RICOH" corresponding to "host name" selected by the user. Thereafter, the display control unit 24 displays read "RICOH" in the file name display unit 2311. At that time, the display control unit 24 displays "RICOH" at a third position from the left the same as that of the third setting item. Among a plurality of pieces of file name constituting information (for example, "20205221500", "multifunction peripheral in building D", and "RICOH") displayed in the file name display unit 2311, constituting information other than "multifunction peripheral in building D" that may be manually input is grayed out and displayed in a state in which the input by the user is not available. Herein, when the user operates the OK button 2351, the display control unit 24 may make transition to a screen in FIG. 16.

### Screen Display Example

FIG. 16 is a diagram illustrating an example of a display screen in a state in which the file name is set after the setting item button is operated on the file name detailed setting screen. As illustrated in FIG. 16, the display control unit 24 displays the attribute information input or set to each of the above-described three setting items in the file name display unit 2211 so as to be arranged in the order of being input or set. As a result, in the file name display unit 2211, the display control unit 24 displays the file name "20205221500 multifunction peripheral in building D RICOH_0001.pdf" as the generated file name. In the file name button 2212, items of the attribute information ("date and time", "manual input", and "host name") input or set by the user are further displayed side by side by the display control unit 24. In this manner, the generation unit 27 arranges respective pieces of file name configuration information associated by input or setting to any of the plurality of pieces of attribute information in the order of being input or set to a plurality of setting item input units (a plurality of setting item buttons 2312) to generate one file name. Then, the display control unit 24 displays one file name generated by the generation unit 27 in the file name display unit 2211.

### Screen Display Example

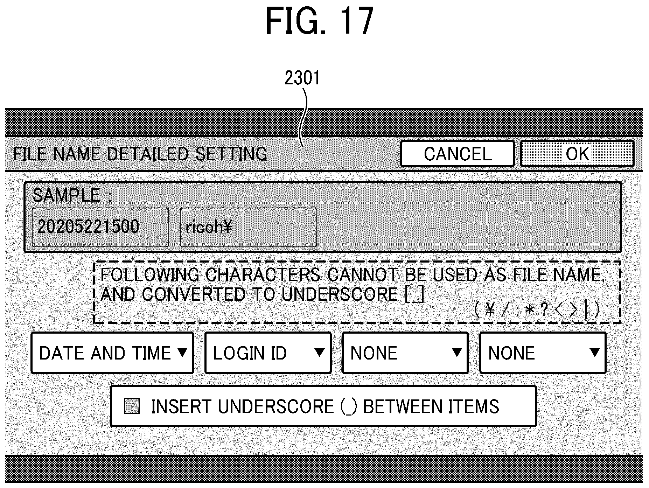

FIG. 17 is a diagram illustrating an example of a message displayed on the display screen in a case where the login ID is selected in the setting item button. As illustrated in FIG. 17, in a case where "login ID" is selected by the user as the attribute information in the setting item, the generation unit 27 may set, as the file name, the login ID that is logging in the information processing apparatus 2.

The login ID may be information other than the login ID as long as this may specify the user who is logging in. For example, information such as a user ID, a user name, and a user's affiliation registered in advance by the user in the information processing apparatus 2, a login server used for login processing and the like in association with the login ID may be used. Although the login ID of the user who logs in when the file name detailed setting is performed may be displayed in the file name display unit 2311, the file name set to the actual scan data is set on the basis of the login ID of the user who logs in when the scan is executed.

### Screen Display Example

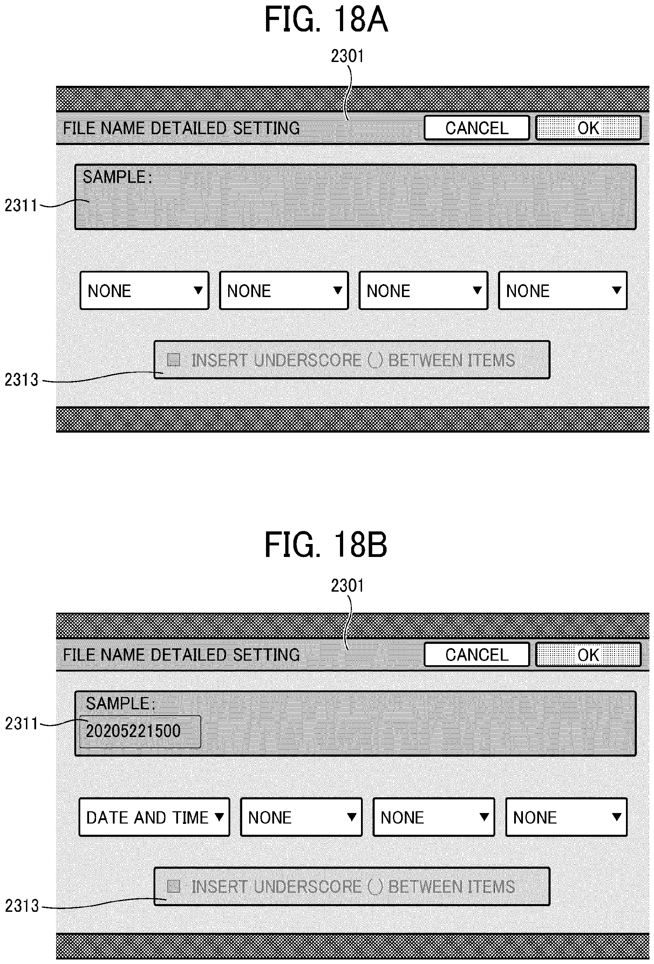

FIGS. 18A and 18B are diagrams illustrating an example of the file name detailed setting screen in a case where an underscore is inserted between the pieces of file name constituting information. The screen examples illustrated in FIGS. 18A and 18B are portions regarding the processing at step S17-9-4; YES, step S17-9-5; NO, and step S17-9-7 described above.

In FIG. 18A, there is no setting item input or set among the four setting items. Therefore, the generated file name configuration information is not present also in the file name display unit 2311. In this state, it is not required to insert an underscore as a predetermined delimiter inserted between a plurality of pieces of file name constituting information, so that the underscore setting insertion button 2313 is grayed out.

In FIG. 18B, "date and time" is selected as the setting item, and only "20205221500" is displayed in the file name display unit 2311. In this state also, since it is not required to insert the underscore as in FIG. 18A, the underscore setting insertion button 2313 is grayed out, and an operation by the user cannot be performed.

### Screen Display Example

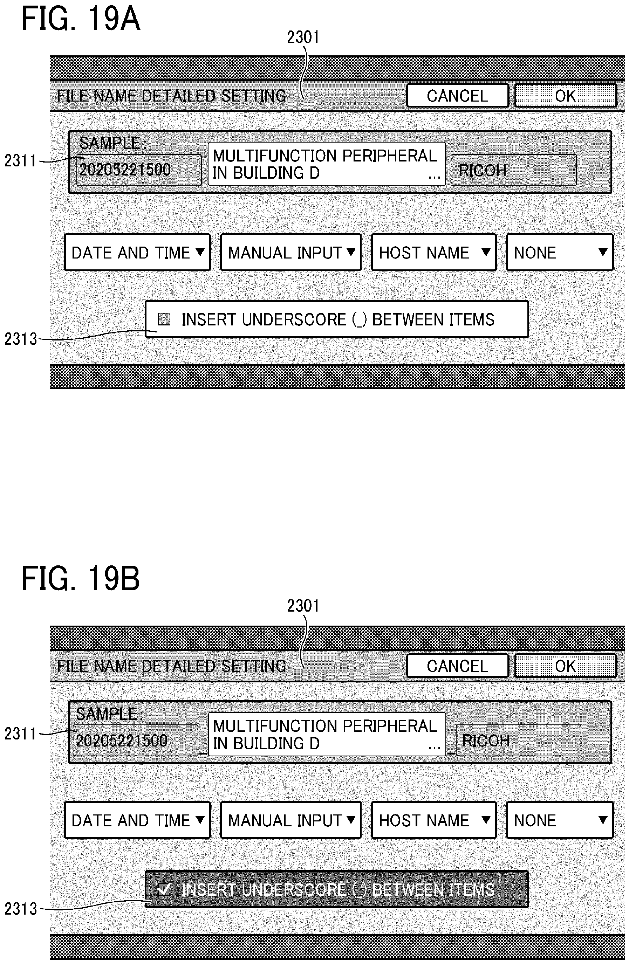

FIGS. 19A and 19B are diagrams illustrating another example of the file name detailed setting screen in a case where the underscore is inserted between the pieces of file name constituting information. The screen examples illustrated in FIGS. 19A and 19B are portions regarding the processing at step S17-9-4; YES, step S17-9-5; YES, and steps S17-9-6 and S17-9-8 described above.

In FIG. 19A, it is input or set to three setting items among the four setting items. Therefore, there are three pieces of generated file name constituting information in the file name display unit 2311. In this state, there are two spaces between the pieces of file name constituting information, and the underscore may be inserted. Therefore, the display control unit 24 displays the underscore setting insertion button 2313 in a state in which the user may operate the same.

FIG. 19B illustrates a state in which the user checks the check box of the underscore setting insertion button 2313 with a check mark in the state in FIG. 19A. When the check box of the underscore setting insertion button 2313 is checked with the check mark by the user, the display control unit 24 displays a predetermined delimiter (for example, underscore) between a plurality of pieces of file name constituting information in the file name constituting information display unit (file name display unit 2311) that displays the file name constituting information. That is, when the check box of the underscore setting insertion button 2313 is checked by the user with the check mark, the acceptance unit 22 accepts the input of the check mark, and the display control unit 24 that detects the accepted state inserts the underscore between the plurality of pieces of file name constituting information displayed in the file name display unit 2311 to display. In a case of FIG. 19B, the underscore (_) is inserted between "20205221500" and "multifunction peripheral in building D" and between "multifunction peripheral in building D" and "RICOH". In this case, the file name constituting information displayed in the file name display unit 2311 is "20205221500_multifunction peripheral in building D_RICOH". Herein, as a method of inserting an underscore between the pieces of file name constituting information displayed in the file name display unit 2311, for example, there is the following method. The display control unit 24 further manages coordinate information regarding a rectangular area of each file name constituting information arranged in the file name display unit 2311. Subsequently, the display control unit 24 inserts the underscore at the coordinates at which the underscore is inserted in the file name display unit 2311 corresponding to a position (coordinates) of each setting item input or set. Note that, the method of inserting the underscore is not limited to the above-described method. A character and a symbol to be inserted may be the character or symbol other than the underscore, or may be a space. Furthermore, even in the setting in which the underscore is not inserted, the file name to which a space is automatically assigned (inserted) between the setting items may be generated. In a case where a plurality of pieces of file name constituting information is generated as described above, the display control unit 24 may display a delimiter (for example, underscore) between the respective pieces of file name constituting information, thereby improving visibility of the displayed file name for the user, which leads to prevention of erroneous recognition of the file name.

At that time, the display control unit 24 may display the underscore setting insertion button 2313 with increased overall luminance. As a result, it becomes possible to notify the user that an underscore insertion function is being executed (valid) in an easy-to-understand manner.

### Screen Display Example

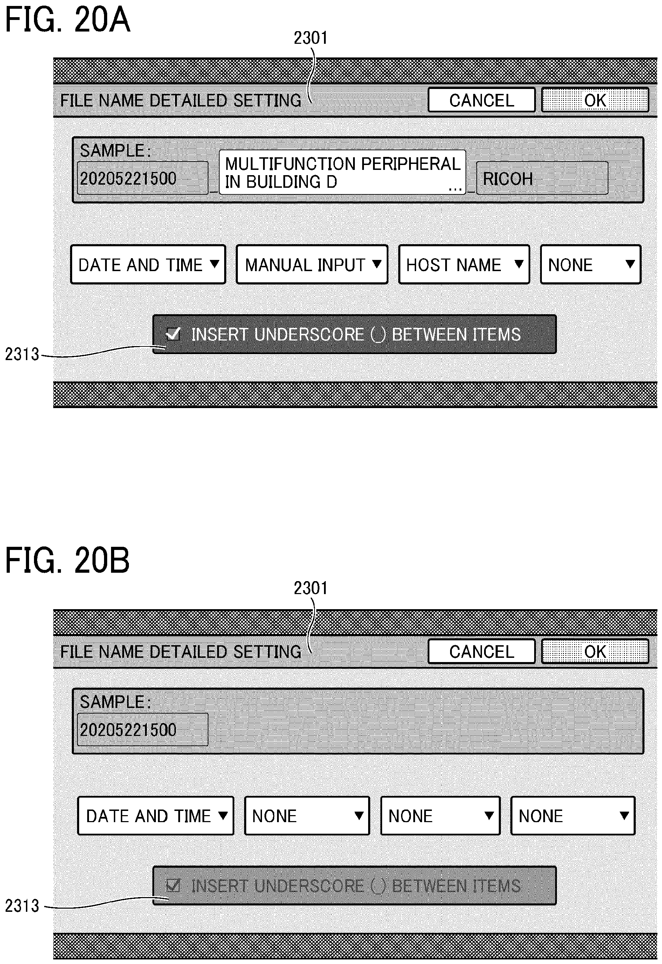

FIG. 20A is a diagram illustrating an example of a display screen in a state in which the underscore is inserted between the pieces of file name constituting information, and FIG. 20B is a diagram illustrating an example of a display screen in a state in which the underscore is not inserted between the pieces of file name constituting information.

FIG. 20A is the same as the screen state in FIG. 19B. In this state, in a case where the user deletes and the like the content of the setting item and makes the number of set items one or smaller, the display control unit 24 may control to decrease the luminance of the entire check box of the underscore setting insertion button 2313 to half the same as illustrated in FIG. 20B.

The screen display examples illustrated in FIGS. 9 to 20 are examples, and the display control unit 24 may display another screen having a content according to each search result on the panel display 240a of the operation panel 240 of the information processing apparatus 2 including a content and a display form of an image to be displayed.

The above-described screen display examples illustrated in FIGS. 10 to 20 are examples, and there is no limitation in a method of displaying the screen and providing the UI regarding file name setting processing. Therefore, the display control unit 34 may display a screen having a content corresponding to each state in a generating process of the file name on a panel display 340a of an operation panel 340 of the information processing apparatus 2.

### Principal Effect of First Embodiment

As described above, according to this embodiment, the information processing apparatus 2 accepts the detailed setting instruction based on the operation on the detailed setting button 2213 on the file name editing screen 2201. Thereafter, the file name constituting information input or set to each setting item displayed after the detailed setting instruction is accepted is generated (step S17-9-1), and the file name constituting information input or set to each setting item is displayed corresponding to each setting item being an operation target displayed in the file name display unit 2211 (steps S17-9-7 and S17-9-8). As a result, also in a case where it is desired to input the file name or in a case where it is desired to reset a part of the input file name, there is an effect that it is possible to edit only information desired to be input or reset.

### Second Embodiment

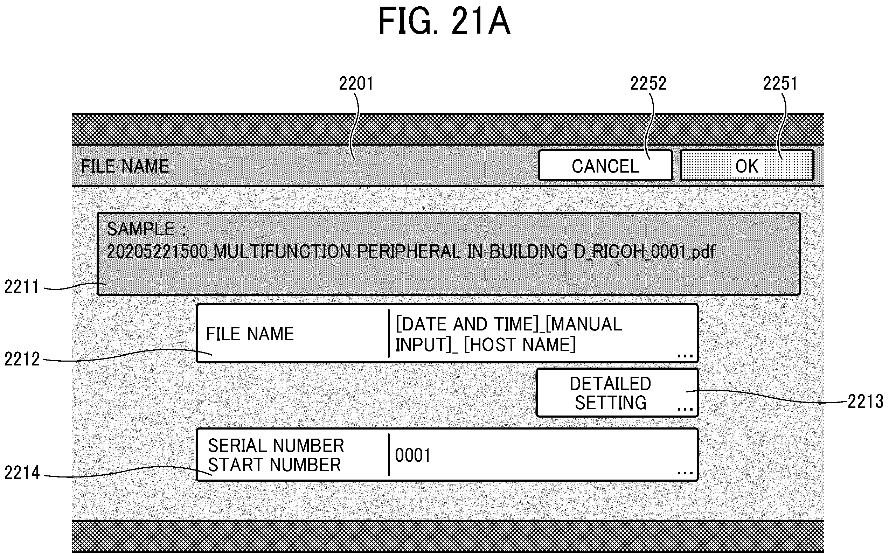

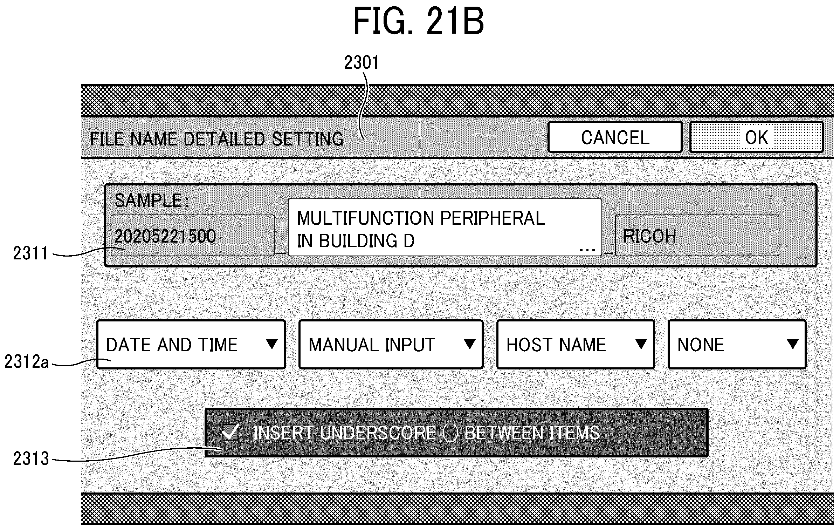

Next, a second embodiment is described with reference to FIGS. 21 to 25. The second exemplary embodiment describes a case where a user resets a file name generated by inputting or setting to a plurality of setting item input units (setting item buttons 2312). A configuration of an information processing system according to the second embodiment is common to each apparatus, each hardware configuration, and each functional configuration in the information processing system according to the first embodiment, so that the description thereof is herein omitted.

### File Name Resetting Processing

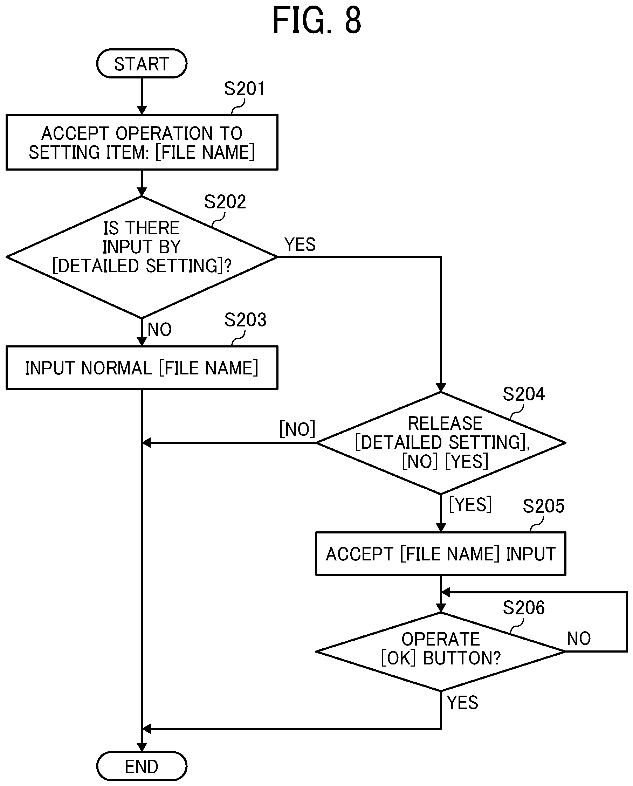

FIG. 8 is a flowchart illustrating an example of file name resetting processing. As illustrated in FIG. 8, an acceptance unit 22 of an information processing apparatus 2 accepts an operation from the user on a setting item [file name] on a file name editing screen 2201, that is, a file name button 2212 (step S201).

Subsequently, a determination unit 25 determines whether there is an input by [detailed setting] (step S202). That is, the determination unit 25 determines whether there is an operation on a detailed setting button 2213 before accepting the operation on the file name button 2212 from the user. The determination at that time may be made, for example, by the information processing apparatus 2 tracking an operation history on the acceptance unit 22 to determine whether there is the operation on the detailed setting button 2213 by the above-described combination.

In a case where it is determined that there is no operation on the detailed setting button 2213 (step S202; NO), the acceptance unit 22 accepts the operation on the file name button 2212 by the user accepted at step S201, and exits this flow (step S203).

In contrast, in a case where it is determined that there is the operation on the detailed setting button 2213 (step S202; YES), the determination unit 25 further determines whether release of [detailed setting] is required (step S204). In a case where the release of [detailed setting] is to be required (step S204; [No]), the determination unit 25 exits this flow without performing special processing.

In contrast, in a case where it is required to release [detailed setting] (step S204; [Yes]), the acceptance unit 22 accepts [file name], that is, an input by the file name button 2212 (step S205). This repeats the determination processing until the determination unit 25 determines that there is an operation on an [OK] button 2251, and exits this flow (step S206). Accordingly, instead of setting information input in [detailed setting] as the file name, information input in [file name] is set as the file name. Note that, when a storage/reading unit 29 stores the information input in [detailed setting] in a storage unit without deleting the same, a display control unit 24 may read and display again the information stored in the storage unit when the user sets [detailed setting] again.

Hereinafter, screen transition examples related to the above-described file name resetting processing are described with reference to FIGS. 21 to 25.

### Screen Display Example

FIG. 21A is a diagram illustrating an example of a file name editing screen in a case where the file name is reset, and FIG. 21B is a diagram illustrating an example of a file name detailed setting screen in a case where a detailed setting button is operated. In FIG. 21A, a generated file name ("20205221500 multifunction peripheral in building D_RICOH_0001.pdf") is displayed in a file name display unit 2211. In the file name button 2212, [date and time], [manual input], and [host name] set by a plurality of setting item input units (setting item buttons 2312a, 2312b, 2312c, and 2312d) are displayed.

In FIG. 21B, a file name detailed setting screen 2301 in a case where the detailed setting button 2213 is operated is displayed. Since this screen is similar to the screen described in FIG. 20A, the description thereof is omitted.

### Screen Display Example

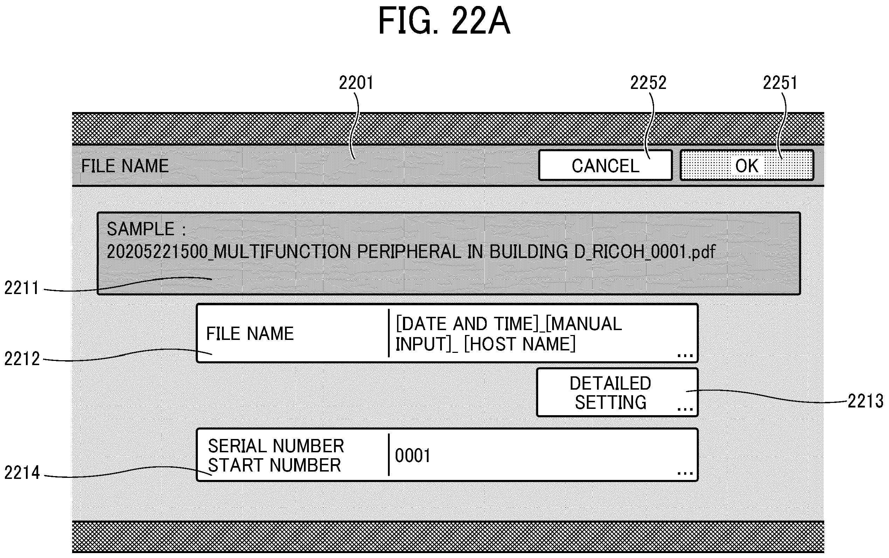

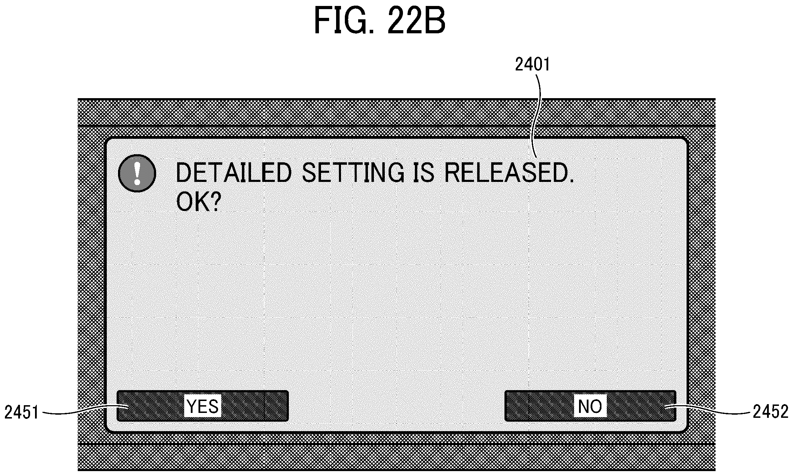

FIG. 22A is a diagram illustrating an example of the file name editing screen in a case where the file name is reset, and FIG. 22B is a diagram illustrating an example of a confirmation screen in a case where the file name button is operated. Since the screen in FIG. 22A is similar to the screen described in FIG. 21A, the description thereof is omitted. FIG. 22B is an example of a file name release screen displayed in a case where the file name button 2212 is operated by the user on the screen in FIG. 22A. When the user operates a [Yes] button 2451 or a [No] button 2452 on this screen, a branch destination of the processing at step S204 described above is changed. That is, after displaying one file name generated by an operation on a detailed setting input unit, in a case where an operation is performed on a file name input unit, the display control unit 24 displays the file name release screen for releasing the generated one file name in a display unit.

### Screen Display Example

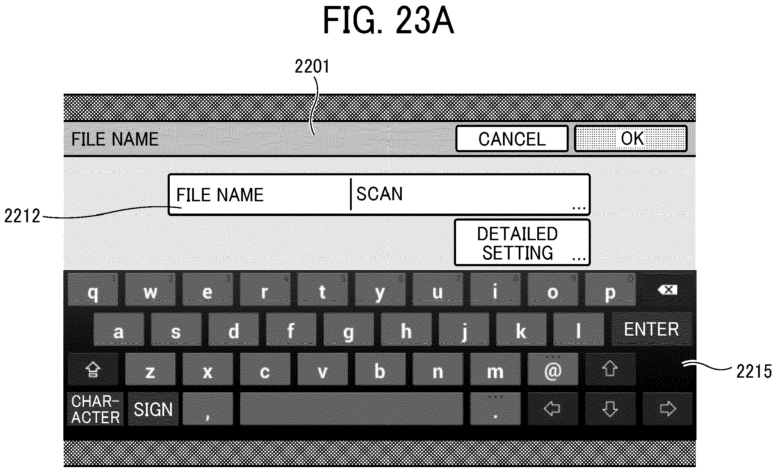

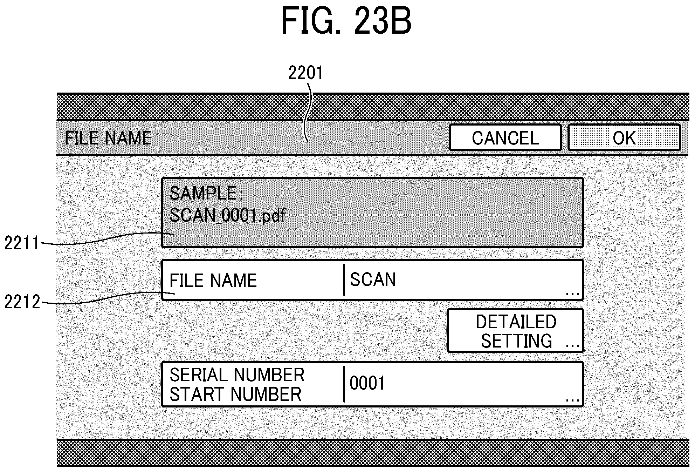

FIG. 23A is a diagram illustrating an example of the file name editing screen at the time of manual input, and FIG. 23B is a diagram illustrating an example of a display screen after the file name is reset by manual input. FIG. 23A illustrates a state in which the user inputs by key "SCAN" to a key input unit 2215 displayed when the file name button 2212 is operated. In FIG. 23B, file name constituting information of "SCAN" input by the user is accepted as constituting information of a part of a new file name, and a newly generated file name "SCAN_0001.pdf" is displayed in the file name button 2212 by the display control unit 24. That is, in a case where an operation for releasing one file name is performed on a file name release screen 2401, the display control unit 24 displays the file name button 2212 for changing the generated one file name in the display unit.

### Screen Display Example

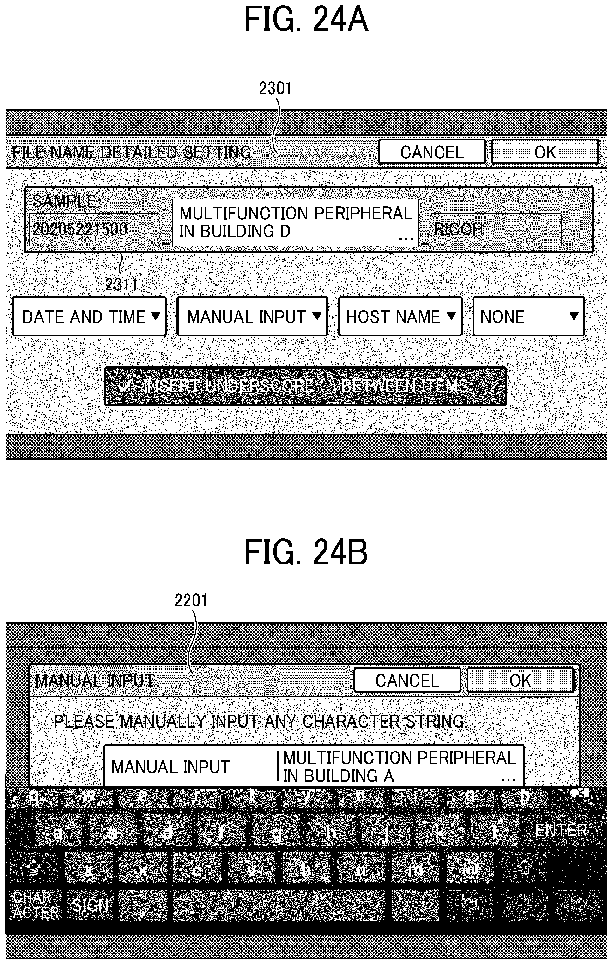

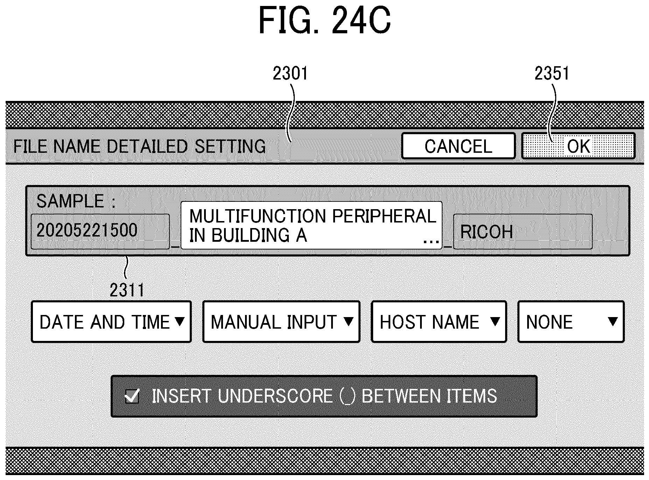

FIG. 24A is a diagram illustrating an example of the file name detailed setting screen in a case where the detailed setting button is operated, FIG. 24B is a diagram illustrating an example of the file name editing screen at the time of manual input, and FIG. 24C is a diagram illustrating an example of the display screen after re-editing by manual input. In FIG. 24A, the generated file name is displayed in a file name display unit 2311 as in the screens in FIGS. 20A and 21B. FIG. 24B illustrates a screen after transition by an operation on the setting item button 2312b ([manual input]) among a plurality of setting item input units (setting item buttons 2312a, 2312b, 2312c, and 2312d) in FIG. 24A. Note that, there is no limitation, and the display control unit 24 may make transition to a similar screen in a case where a location (area) corresponding to the setting item button 2312b in the file name display unit 2311 is operated. That is, in a case where "manual input" is set in the setting item button 2312, the display control unit 24 may selectively display a location (area) corresponding to the setting item button 2312b in the file name display unit 2311. Herein, the display control unit 24 displays a state in a case where the user inputs by key [multifunction peripheral in building A]. FIG. 24C illustrates a screen after transition by the operation of an OK button 2351 after the key input. In FIG. 24C, a reset new file name ("20205221500_multifunction peripheral in building A_ RICOH") is displayed in the file name display unit 2311. That is, with respect to any file name constituting information of the already generated file name, the generation unit 27 replaces existing file name constituting information with file name constituting information obtained by the operation on the setting item button that generates the file name constituting information to generate a new file name. Thereafter, the display control unit 24 displays the generated new file name in the file name display unit 2311.

### Screen Display Example

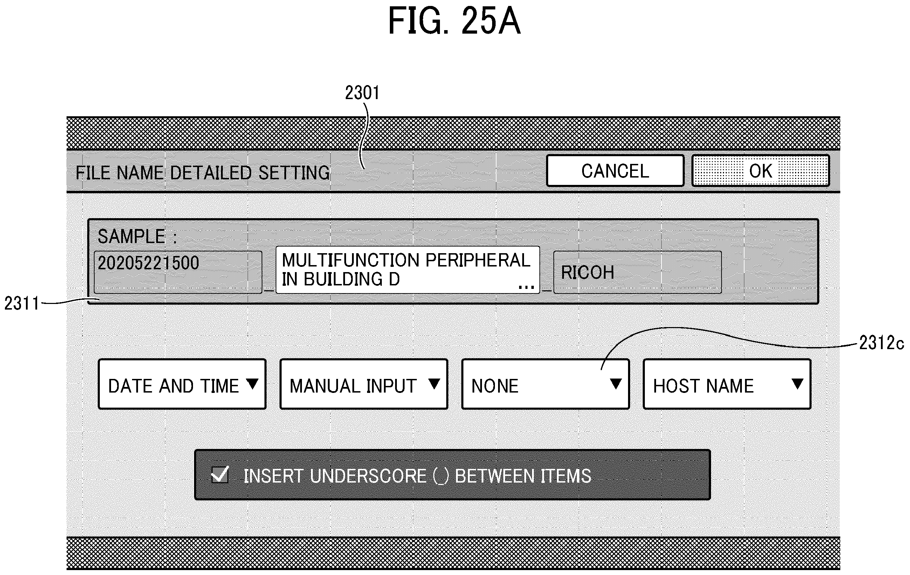

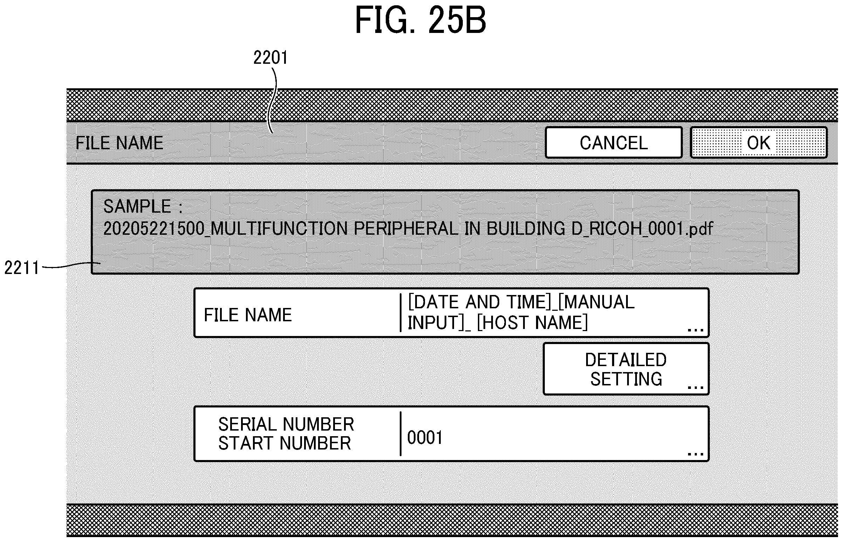

FIG. 25A is a diagram illustrating an example of the file name detailed setting screen in a case where there is a blank field in the setting item, and FIG. 25B is a diagram illustrating an example of the display screen after re-editing in a case where there is a blank field in the setting item. In FIG. 25A, the setting item button 2312c ([none]) among the plurality of setting item input units (setting item buttons 2312a, 2312b, 2312c, and 2312d) is present at the position of a third setting item button. As a result, a state in which nothing is displayed in the third file name constituting information in the file name display unit 2311 is displayed. In such a case, as illustrated in FIG. 25B, the display control unit 24 displays file name constituting information ([host name]) input or set by the setting item button 2312d next to the file name constituting information input or set by the setting item button 2312c ([none]), next to file name constituting information ([manual input]) input or set by the setting item button 2312b preceding the setting item button 2312c ([none]) (while reducing a space). As a result, the display control unit 24 newly displays the file name "20205221500_multifunction peripheral in building D_RICOH_0001.pdf" in the file name button 2212 that also serves as the display unit. In this embodiment, the setting item button 2312c ([none]) is treated as an example of a setting item non-input unit. Note that, the setting item button as the setting item non-input unit is not limited to the setting item button 2312c, and all the buttons set as [none] among other setting item buttons 2312a, 2312b, and 2312d are treated as an example of the setting item non-input unit.

The screen display examples illustrated in FIGS. 21 to 25 described above are examples, and there is no limitation in a method of displaying the screen and providing UI regarding file name setting processing. Therefore, a display control unit 34 may display a screen having a content corresponding to each state in a generating process of the file name on a panel display 340a of an operation panel 340 of the information processing apparatus 2.

### Principal Effect of Second Embodiment

As described above, according to this embodiment, with respect to any file name constituting information of the already generated file name, the generation unit 27 replaces existing file name constituting information with file name constituting information obtained by the operation on the setting item button that generates the file name constituting information to generate a new file name. Thereafter, the display control unit 24 displays the generated new file name in the file name display unit 2311. As a result, the effect of the first embodiment is obtained, and the user may further partially edit and change the existing file name.

In the file name constituting information forming the file name, the file name is displayed while reducing a space in a portion that does not need to be set, so that the user may reset the file name without minding the content and length of the file name constituting information forming the file name.

### Supplement to Embodiments

Note that the functions of the embodiments may be implemented by a computer-executable program described in a legacy programming language such as assembler, C, C++, C#, and Java (registered trademark), an object-oriented programming language or the like, and the program for executing the functions of the embodiments may be distributed via a telecommunication line.

The program for executing the functions of the embodiments may be stored in a recording medium such as a ROM, an electrically erasable programmable read-only memory (EEPROM), an erasable programmable read-only memory (EPROM), a flash memory, a flexible disk, a compact disc (CD)-ROM, a CD-re-writable (RW), a DVD-ROM, a DVD-RAM, a DVD-RW, a Blu-ray disc, an SD card, or a magneto-optical disc (MO) to be distributed.

Each function of the above-described embodiments may be implemented by one or a plurality of processing circuits. Herein, the "processing circuit" in the present specification includes a device programmed to execute each function by software like a processor implemented by an electronic circuit. The device refers to, for example, a processor, an application specific integrated circuit (ASIC) designed to execute each function described above, a digital signal processor (DSP), a field programmable gate array (FPGA), a system on a chip (SOC), a graphics processing unit (GPU), a conventional circuit module and the like.

Although the information processing apparatus, the information processing system, the information processing method, and the program according to an embodiment of the present disclosure are described so far, the present disclosure is not limited to the above-described embodiments, change within the scope that may be conceived by those skilled in the art is possible, such as addition, change, or deletion of other embodiments, and any aspect is included in the scope of the present disclosure as long as the operation and effect of the present disclosure are exhibited.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a TCP/IP signal carrying computer code over an IP network, such as the Internet. The carrier medium may also include a storage medium for storing processor readable code such as a floppy disk, hard disk, CD-ROM, magnetic tape device or solid state memory device.

## Claims

1. An information processing apparatus (2) comprising:
an acceptance unit (22) configured to accept an operation on each of a plurality of setting item input units (2312) for setting a file name;
a generation unit (27) configured to generate one file name based on a plurality of pieces of file name constituting information associated with each other in response to the operation on each of the plurality of setting item input units (2312); and
a display control unit (24) configured to display the one file name generated by the generation unit (27) on a display (240a).

2. The information processing apparatus (2) according to claim 1,
wherein the display control unit (24) displays the plurality of setting item input units (2312) on the display (240a) and displays a plurality of pieces of attribute information given to the plurality of setting item input units (2312) on the display (240a), and
wherein the generation unit (27) arranges pieces of file name constituting information associated by input or setting to any one of the plurality of pieces of attribute information in order of being input or set to the plurality of setting item input units (2312) to generate the one file name.

3. The information processing apparatus (2) according to claim 1,
wherein the display control unit (24) selectively displays a file name input unit (2212) for inputting the one file name and a detailed setting input unit (2213) for setting the one file name on the display (240a), and displays the plurality of setting item input units (2312) on the display (240a) in a case where an operation on the detailed setting input unit (2213) is accepted.

4. The information processing apparatus (2) according to claim 3,
wherein, with respect to any file name constituting information that constitutes the one file name, the generation unit (27) replaces the file name constituting information with new file name constituting information obtained by an operation on the setting item input unit (2312) that has generated said any file name constituting information, to generate a new file name, and
wherein the display control unit (24) displays the new file name generated by the generation unit (27) on the display (240a).

5. The information processing apparatus (2) according to claim 3,
wherein, in a case of displaying the plurality of pieces of file name constituting information in a file name constituting information display unit (2311) that displays the file name constituting information, the display control unit (24) displays a predetermined delimiter between the plurality of pieces of file name constituting information.

6. The information processing apparatus (2) according to claim 3,
wherein, in a case where there is a setting item non-input unit (2312c) to which input or setting is not performed among the plurality of setting item input units (2312), the display control unit (24) displays file name constituting information input or set by the setting item input unit (2312) next to the setting item non-input unit (2312c), next to file name constituting information input or set by the setting item input unit (2312) preceding the setting item non-input unit (2312c).

7. The information processing apparatus (2) according to any one of claims 3 to 6,
wherein, after displaying the one file name generated by an operation performed on the detailed setting input unit (2213), the display control unit (24) displays a file name release screen (2401) for releasing the generated one file name on the display (240a) in response to an operation on the file name input unit (2212).

8. The information processing apparatus (2) according to claim 7,
wherein, in response to an operation for releasing the one file name on the file name release screen (2401), the display control unit (24) displays the file name input unit (2212) for changing the generated one file name on the display (240a).

9. The information processing apparatus (2) according to any one of claims 1 to 8,
wherein the display control unit (24) displays the plurality of setting item input units (2312) on the display (240a) and displays a plurality of pieces of attribute information given to the plurality of setting item input units (2312) on the display (240a), and
wherein the plurality of pieces of attribute information include input information by manual input, information for identifying the information processing apparatus (2), and identification information and date and time information of login of a user.

10. The information processing apparatus (2) according to any one of claims 1 to 9,
wherein the file name is a name set according to processing including reading of a document, facsimile transmission and reception, storing of data in a storage after reading of the document, and mail sending after reading of the document.

11. An information processing system (1) comprising:
the information processing apparatus (2) according to any one of claims 1 to 10; and
an information management apparatus (3) configured to manage information including a file to which the one file name generated by the information processing apparatus (2) is assigned.

12. An information processing method to be executed by an information processing apparatus (2), the method comprising:
accepting (S17-1) an operation on each of a plurality of setting item input units (2312) for setting a file name;
generating (S17) one file name based on a plurality of pieces of file name constituting information associated with each other in response to the operation on each of the plurality of setting item input units (2312); and
displaying (S17-7) the one file name generated by the generating on a display (240a).

13. A carrier medium carrying computer-readable program code that when executed by a computer, causes the computer to execute the information processing method of claim 12.
